# EUROPÄISCHE PATENTSCHRIFT

(11) **EP 3 134 209 B1**
(45) Veröffentlichungstag und Bekanntmachung des Hinweises auf die Patenterteilung: **01.04.2020**
(21) Anmeldenummer: 14758276.1
(22) Anmeldetag: 30.05.2014
(51) Int. Cl.: B01L 3/00

(54) **VORRICHTUNG UND VERFAHREN, UM LOGARITHMISCHEN TESTAUFWAND BEI REIHENTESTUNG FLÜSSIGER ODER GASFÖRMIGER PROBEN ZU ERREICHEN**
APPARATUS AND METHOD FOR ACHIEVING LOGARITHMIC TESTING EFFORT IN SERIES TESTING OF LIQUID OR GASEOUS SAMPLES
DISPOSITIF ET PROCÉDÉ PERMETTANT D'ATTEINDRE UN EFFORT DE TEST LOGARITHMIQUE LORS D'ESSAIS EN SÉRIE D'ÉCHANTILLONS LIQUIDES OU GAZEUX

(30) Priorität: 23.11.2013 DE 102013019653
(43) Veröffentlichungstag der Anmeldung: 01.03.2017
(73) Patentinhaber: Taeger, Thomas, 64287 Darmstadt (DE)
(72) Erfinder: Taeger, Thomas, 64287 Darmstadt (DE)
(86) Internationale Anmeldenummer: PCT/DE2014/000274
(87) Internationale Veröffentlichungsnummer: WO 2015/074634

(56) Entgegenhaltungen:
- US-A1- 2008 156 079
- US-A1- 2011 143 949
- US-A1- 2012 314 528
- US-A1- 2013 302 791

## Beschreibung

### Stand der Technik mit Fundstellen:

Aus der Informatik ist bekannt, dass das vertikale Durchsuchen eines binären oder t-ären Baumes von der Wurzel zu einem Blattknoten nur logarithmischen Aufwand erfordert. (Horst Wettstein: "Systemprogrammierung", Wien 1980, S. 278 ff).

Des weiteren ist seit Heron von Alexandria die Möglichkeit bekannt, durch U-förmige Saugheber, deren Ausgangsöffnung tiefer liegt als deren Überlaufniveau, Flüssigkeiten nach Überlauf durch den Saugheber selbsttätig in ein tieferliegendes Gefäß soweit absaugen zu lassen, bis die Ansaugöffnung nicht mehr in die Flüssigkeit eintaucht oder das Flüssigkeitsniveau unter die Höhe der Auslassöffnung gefallen ist. (Wilhelm Schmidt (Hrg.): "HERONIS ALEXANDRINI OPERA QVAE SUPERSUNT OMNIA, Vol. 1: PNEVMATICA ET AVTOMATA", Leipzig 1899)
Des weiteren erlaubt für viele Anwendungsbereiche PCR (polymerase chain reaction) Amplifikation der in Proben gesuchten DNA um den Faktor 34 Milliarden (2 hoch 35 bei 35 Verstärkungs-Zyklen) in anderthalb Stunden (Michael A. Innis and David H. Gelfand: "Optimization of PCRs", in "PCR Protocols, A Guide to Methods and Applications", San Diego 1990).

Des weiteren ist die Anwendung des logarithmischen Aufwand erzielenden Halbierungssuchens auf Mischproben bei PCR-Tests bekannt: "Durch die Empfindlichkeit der PCR-Tests ist es möglich, Proben in sogenannten Pools (z. B. 96 Einzelproben) zusammenzufassen. Wird ein Pool positiv getestet, wird seine Größe solange verkleinert (meistens halbiert), bis die verursachende Probe gefunden ist" (http://de.wikipedia.org/wiki/Polymerase-Kettenreaktion, abgerufen am 2013-11-05).

### Kritik des Standes der Technik:

Bisherige Testverfahren arbeiten oft sequentiell und dadurch mit linearem Aufwand.

Bisherige Suchtests (Screenings) arbeiten häufig mit kostengünstigen, wenig sensitiven Testmethoden, sodass ein entsprechend höheres Restrisiko für falsch-negative Testergebnisse hingenommen werden muss.

Bisher häufig eingesetzte Antikörpertests können erst nach der Ausbildung von Antikörpern, also einer langen Latenzzeit, angewandt werden.

Durch Amplifikation hochsensitive Tests wie PCR bleiben aus Kostengründen bisher eher speziellen Einzelfällen vorbehalten.

Beim üblichen, auch automatisierten, Pipettieren sind Ärosolbildung, Luftwirbel und somit häufig Kreuzkontaminationen schwer vermeidbar. Insbesondere PCR ist wegen der starken Amplifikation aber sehr anfällig für Kreuzkontaminationen, die für falsch-positive Testergebnisse stark verantwortlich sind. US 2012/314528 A1 offenbart eine Vorrichtung mit Proben-Kammern, die zur Herstellung von Verdünnungsreihen geeignet ist.

In Ähnlicher Weise offenbart US2008/156079 A1 eine Vorrichtung, die zur Herstellung von Verdünnungsreihen ist. Diese Vorrichtungen weisen jedoch keine binär oder t-är baumartige Struktur auf, und werden nicht zur Reihentestung flüssiger Proben benutzt.

### Aufgabe:

Ziel der vorliegenden Erfindung ist es, einen logarithmischen Aufwand auch bei großen Reihentestungen mit wenigen positiven Proben zu erreichen unter Berücksichtigung größtmöglicher Sensitivität und Spezifität. Dabei ist der Minimierung des Handling-Aufwands und der Kreuzkontaminationsgefahr besonders Rechnung zu tragen, insbesondere bei Anwendung von Amplifikation. Spätere Automatisierungsmöglichkeiten sollen schon beim Entwurf der Grundversion berücksichtigt werden.

Die prinzipielle Möglichkeit, den durch Bildung von Mischproben entstehenden Verlust an Sensitivität durch Amplifikation wieder auszugleichen und so billigere, aber nicht so sensitive Tests durch wenige, teurere, sichere, amplifizierende Tests zu ersetzen, soll mithilfe der Erfindung mit vertretbarem Aufwand nutzbar werden, wo die Test-Methode dies zulässt.

Die Sicherheit des Verfahrens soll auch bei Funktionsstörungen, insbesondere in großen Reihentests, so weit gewährleistbar sein, dass das Verfahren keine falsch-negativen Testergebnisse liefert.

Die erfindungsgemäße Vorrichtung soll auch als preisgünstiges Einweg-Spritzgussteil produziert werden können.

Der Aufwand für teure Handhabungs-Apparaturen soll durch ein simples Verfahren ersetzt werden.

### Bezugszeichenliste:

Die Bezugszeichen aus folgender Liste werden einheitlich für alle Figuren, Texte und Formeln verwendet. Die zu den ersten 2 der t Proben gehörigen Elemente enden jeweils auf a oder b. Die Notation n(a|b|...) steht für na oder aber nb oder aber n..., wobei ... für t > 2 relevant ist.

| | |
|---|---|
| + | positiv getestete Probe |
| - | negativ getestete Probe |
| ∼ | implizit negative Probe |
| aef2 | t=2, h=16, m=65536 |
| aef3 | t=3, h=10, m=59049 |
| aef4 | t=4, h=8, m=65536 |
| aef10 | t=10, h=5, m=100000 |
| aef1 | linear analysis, m=62000 |
| bt | Teilbaum, allgemein |
| dksg | lichte Weite der Gabel einer Spritze |
| f1a | Blattknoten [kb] mit Einzelproben [pe] |
| f1b | implizit negativer Teilbaum [bt], weilSammelstatus in [kpj] negativ war |
| f1c | kpg = kn von kpj |
| f1d | kpj = kv von kpg |
| f1e | interne Knoten [ki], jeweils eine [kp] mit Mischprobe [pm] |
| f1 | Legende: |
| f11a | Proben-Mischpfade von den Blattknoten zur Wurzel |
| f11b | Proben-Testfade von der Wurzel zu den Blattknoten |
| f11c | positiv getestet |
| f11d | negativ getestet |
| f11e | implizit negativ |
| f2kn | kn in Probeneinfüllschräglage |
| f2kv | kv in Überlaufschräglage |
| f3kh | kh mit vh >= 1/t des vp |
| f3kp | kp mit vp |
| f3kr | kr mit vr=(t-1)/t des vp |
| fo | Öl |
| fp | Probe |
| fd | Druck |
| f5a | ld(a+b+c)=ld von kv |
| f5b | lp(a+b+...)=lp zu kv |
| f5c | lo(a+b+...)=lo zu kv |
| f6vt3 | Vorrichtung: t=3, h=3 |
| f6vt3h2 | Vorrichtung vo mit t=3 und h=2 |
| f6la | Proben-Mischpfade Blattknoten zur Wurzel |
| f6lb | Proben-Testpfade Wurzel zu Blattknoten |
| f6lc | positive Einnzelprobe |
| f6ld | positive Mischprobe |
| f6le | negativ getestet |
| f6lf | implizit negativ |
| f7a | Einzelproben pe, = Blattknoten |
| f7b | kpc = kn von kpf |
| f7c | Überlauf 1/t der pe |
| f7d | (t-1)/t pe, wird getestet, falls kv positiv |
| f7e | kpf = kv von kpc |
| f7f | Überlauf 1/t der pm |
| f7g | (t-1)/t pm, wird getestet, falls wv positiv |
| f7h | Mischproben pm, = interne Knoten |
| f7i | muss t/t voll werden, sonst Fehler |
| f7la | Proben-Überlaufleitungen lp... |
| f7lb | ggf. Öl-Leitungen lo... |
| f7lc | ggf. Druckausgleichs-Ltg. ld... |
| f8a | vh >= 1/t des vp |
| f8b | kp mit vp |
| f8c | kr mit vr = (t-1)/t des vp |
| f12a | 3 Proben dichtverteilt in 121 => 13 Tests => 11% |
| f121a | Proben-Mischpfade Blattknotenzur Wurzel |
| f12lb | Proben-Testpfade Wurzel zu Blattknoten |
| f12lc | positiv getestet |
| f12ld | negativ getestet |
| f12le | implizit negativ |
| f13a | 3 positive Proben gleichverteilt in 121 => 31 Tests => 26% |
| f13la | Proben-Mischpfade Blattknotenzur Wurzel |
| f13lb | Proben-Testfade Wurzel zu Blattknoten |
| f13lc | positiv getestet |
| f13ld | negativ getestet |
| f13le | implizit negativ |
| f14a | kh mit vh >= 1/t des vp |
| f14b | kp mit vp |
| f14c | kr mit vr = (t-1)/t des vp |
| f20sim | AnalysisExpenseFactor (= AnalysedNodeCount / LeafNodeCount) for P=0..19% uniformelyDistributed - Diese Überschrift von Fig.20 verwendet Parameternamen der Simulationssoftware. Diese werden konkretisiert von den Parametersätzen aef2, aef3, aef4, aef10 und aef1, die in den Bezugszeichen aef2, aef3, aef4, aef10 und aef1 definiert sind. |
| gkrkh | Grenze kr / kh |
| H | theoretische Höhe des Gesamt-Testbaumes / der Vorrichtungen-Kaskade |
| h | Höhe des Baumes einer einzigen Vorrichtung (h=1 in der Wurzel) |
| hdo | lichte Höhe für abdeckendes Öl |
| hdpe | den Proben-Überlauf sperrende Höhendifferenz |
| hdpu | den Proben-Überlauf einleitende Höhendifferenz |
| ho1u | hydrostatisches Niveau der ersten Öl-Kammer während ihrer Überlaufschräglage; höchstes Ölniveau innerhalb der Öl-Kammer |
| ho2u | hydrostatisches Niveau der zweiten Öl-Kammer während ihrer Überlaufschräglage; höchstes Ölniveau innerhalb der Öl-Kammer |
| hoe | höchstgelegenes Öl-Kammereck |
| hou | höchstes Ölniveau der leerzusaugenden Öl-Kammer |
| hpe | maximaler Mischprobenpegel in Einfüllschräglage |
| hpu | Probenpegel in Überlaufschräglage |
| hsu | Überlaufhöhe im Überflussschacht |
| kb | Blattnoten (Einzelprobe) einer Vorrichtung |
| kba,kbb,kb... | Blattnoten (Einzelproben) a, b und ... |
| kh | Proben-Kammerhals |
| khm | die t Proben aus kh(a\|b\|...) mischende Kammer |
| kh(a\|b\|...) | Proben-Kammerhals für Probe a, b bzw.... |
| ki | interner Knoten mit Mischprobe pm |
| km | Kugel zum Mischen der Probe |
| kn | logisch untergeordneter, physisch höherliegender NachfolgerKnoten |
| ko1 | erste Öl-Kammer, zum Aufnehmen des Öls |
| ko2 | zweite Öl-Kammer, zum Zwischenspeichern um eine Schräglage (Taktung) |
| kod | Schrägdecke ko1d oder ko2d einer Öl-Kammer |
| kp | Proben-Kammer |
| kpa,kpb,kp... | Proben-Kammern a, b und ... |
| kr | Probenrückhaltekammer für zu testende Mischprobe |
| krp | Aufweitung der Probenrückhaltekammer an seiner der Proben-Überlaufkuppe abgewandten Seitenwand |
| ks | Spritze als Kammer |
| ksg | Gabel an der Spritze zur Aufnahme von zwei Nadeln |
| ksh | hinteres Ende der Spritze |
| ksk | Spritzenkolben |
| ksno | In das obere Kammervolumen ragende Nadel für Druckausgleich |
| ksnu | In das untere Kammervolumen ragende Nadel zum Einbringen oder Entnehmen von Proben oder Reagenzien |
| kss | Drehbewegung zum Einstechen der Nadeln |
| ku | Überflussbehälter |
| kv | logisch übergeordneter, physisch tieferliegender Vorgängerknoten |
| ld(a\|b\|...) | Druckausgleichsleitung der Probenkammer a oder aber b oder aber ... zur logisch untergeordneten Probenkammer |
| lda,ldb,ld... | Druckausgleichsleitung der Probenkammer zu den logisch untergeordneten Probenkammern a, b und ... |
| ldo | Ölkammer-Druckausgleich |
| ldo(a\|b\|...) | Ölkammer-Druckausgleich für Probe a oder aber b oder aber ... |
| lkso | Leitung zwischen oberer Nadel und Spritzenkammer |
| lksu | Leitung zwischen unterer Nadel und Spritzenkammer |
| lo | Ölausgangsleitung zum logisch übergeordneten Knoten hin |
| lo(a\|b\|...) | Öleingangsleitung von der untergeordneten Probe a oder aber b oder aber ... in die erste der beiden Ölkammern hinein |
| loa,lob,lo... | Öleingangsleitungen von den untergeordneten Proben a, b und ... in die erste der beiden Ölkammern hinein |
| lp | Probenausgangsleitung |
| lp(a\|b\|...) lp(a+b+...) | Probeneingangsleitung der Probe a bzw. b bzw.... |
| | Probenausgangsleitung mit Mischung aus Probe a UND b UND ... |
| lpa,lpb,lp... | Probeneingangsleitungen |
| lpu | Proben-Überlaufleitung |
| lpu(a\|b\|...) | Überlaufleitung der Probe a, b bzw.... |
| lpue | Eingangsöffnung zu einer Proben-Überlaufleitung hin |
| lpue(a\|b\|...) lpuk | Eingangsöffnung zur Überlaufleitung der Probe a, b bzw.... hin |
| | höchste Kuppe der Proben-Überlaufleitung |
| lpuk(a\|b\|...) | höchste Kuppe der Überlaufleitung für Probe a, b bzw. ... |
| m | Anzahl der in eine einzige Vorrichtung einbringbaren Einzelproben, also Anzahl Blattknoten, also t**h |
| mm | mittelschwerer schwebender Stoff |
| mo | leichtester schwebender Stoff |
| ms | Senkrechte Mittenachse einer Proben-Kammer in Ruhestellung |
| mu | schwerster schwebender Stoff |
| N | Gesamtzahl der auf die Vorrichtungen einer Gesamt-Vorrichtung zu verteilenden Einzelproben |
| o | abdeckendes Öl |
| od(a\|b\|...) | die Druckausgleichsleitung von kv a oder aber b oder aber ... her abdichtendes Öl |
| p | in Formeln: Positiv-Rate in Prozent von N |
| p0 | neutrale Pseudoprobe |
| pa,pb,p... | Proben a, b und ... |
| pe | Einzelprobe |
| pe+ | positiv getestete Einzelprobe in einer Vorrichtungen-Kaskade |
| pes | Probeneinfüll-Schräglage der Proben-Kammer |
| pm | Mischprobe |
| pp | prognostizierte Positiv-Rate, in Prozent von N |
| pus | Proben-Überlauf-Schräglage der Proben-Kammer |
| sk | Schnittfläche durch die Proben-Kammer |
| so1 | Ölsaugheber aus der ersten Ölkammer heraus |
| so1a | Ausgangsöffnung des Öl-Saughebers von Ölkammer 1 zu Ölkammer 2 |
| sole | Ansaugöffnung des Öl-Saughebers aus der 1. Öl-Kammer |
| solke | höchste Kuppe des Öl-Saughebers aus der 1. Öl-Kammer während deren Einfüllschräglage |
| so1ku | höchste Kuppe des Öl-Saughebers aus der 1. Öl-Kammer während deren Überlaufschräglage |
| so2 | Ölsaugheber aus der zweiten Ölkammer heraus |
| so2a | Ausgangsöffnung eines Öl-Saughebers von Ölkammer 2 zu kh und kr hin |
| so2e | Ansaugöffnung des Öl-Saughebers aus der 2. Öl-Kammer |
| so2ke | höchste Kuppe des Öl-Saughebers aus der 2. Öl-Kammer während deren Einfüllschräglage |
| so2ku | höchste Kuppe des Öl-Saughebers aus der 2. Öl-Kammer während deren Überlaufschräglage |
| so2x | Ausgangsöffnung eines Öl-Saughebers von Ölkammer 2 zu Ölkammer 3 hin |
| soke | höherliegendes Öl-Saugheber-Niveau |
| soku | höchstgelegener Punkt einer Überlaufkuppe eines Öl-Saughebers in Überlauf-Schräglage |
| su | Überflussschacht bzw. Überflussleitung |
| sue | Eingangsöffnung des Überflussschachts bzw. der Überflussleitung |
| T | Anzahl der zur Aufnahme der N Proben nötigen Vorrichtungen |
| t | Anzahl direkter Nachfolgerknoten pro Knoten |
| vb | eine äußerste, Blattknoten (Einzelproben) tragende Vorrichtung |
| vba,vbb,vb... | äußerste, Blattknoten (Einzelproben) tragende Vorrichtung a, b oder ... |
| vh | Volumen im Proben-Kammerhals |
| vk | Vorrichtungen-Kaskade |
| vkrp | Volumen der Aufweitung krp der Probenrückhaltekammer |
| vkso | hinter dem Spritzenkolben liegender, mit kh verbundener Hohlraum für Druckausgleich |
| vksu | vor dem Spritzenkolben liegender, mit kr verbundener Hohlraum für Probenentnahme und/oder Reagenzienzufuhr |
| vo | logisch übergeordnete Vorrichtung bzw. Baum |
| voe | Volumen im höchstgelegenen Öl-Kammereck der Schrägdecke oberhalb des Niveaus der Öl-Überlaufkuppe in deren Überlaufschräglage |
| vovu | Übergang von der übergeordneten Vorrichtung vo zu einer untergeordneten Vorrichtung vu... |
| vp | Probenvolumen |
| vr | Volumen der Probenrückhaltekammer |
| vua,vub,vu... | zu den Blattknoten hin gelegene (äußere), logisch untergeordnete Vorrichtung a, b bzw. ... |
| wba,wbb,wb... | Wurzel der äußersten, Blattknoten (Einzelproben) tragenden Vorrichtung a, b bzw. ... |
| wb... + | positive Einzelproben tragende wb |
| weo | Öleinleitschräglage |
| weo1 | Öleinleitschräglage der ersten Öl-Kammer |
| weo2 | Öleinleitschräglage der zweiten Öl-Kammer |
| wg | Wurzel der Gesamtvorrichtung, ggf. incl. Kaskade |
| wua,wub,wu... | Wurzel der zu den Blattknoten hin gelegenen (äußeren), logisch untergeordneten Vorrichtung a, b bzw. ... |
| wuo | Überlaufschräglage einer Öl-Kammer |
| wv | Wurzel einer Vorrichtung |

### Lösung:

Gegenstand der Erfindung ist ein Verfahren, das bei Reihentestung flüssiger oder gasförmiger Proben, von denen nur ein geringer Anteil als positiv erwartet wird, mit von der Erfindung unabhängigen und bevorzugt amplifizierenden Testmethoden den nötigen Testaufwand auf eine logarithmische Größenordnung verringert, weitgehend selbsttätig und gemäß einer weiteren Ausgestaltung der Erfindung zwecks geringerer Fehlerfortpflanzung im Mischverhältnis getaktet arbeitet, und
eine der Anwendung dieses Verfahrens dienende Vorrichtung mit baumartig verbundenen Proben-Kammern, die gemäß weiterer Ausgestaltungen der Erfindung mit Saughebern und getaktet realisiert werden und / oder deren Proben und verbindenden Leitungen mit abdeckendem Öl o.ä. weitgehend selbsttätig abgeschlossen werden können, um insbesondere bei amplifizierenden Testmethoden wie z.B. PCR störenden Kreuzkontaminationen vorzubeugen und eine möglichst gleichmäßige Mischung zu erzielen.

Über die Proben wird logisch eine baumartige Struktur (idealerweise ein voller Baum) errichtet.

Die kostspieligen Tests und ggf. Amplifikationen beschränken sich auf die Wurzel der Vorrichtung plus die Proben in Testzweigen, in denen positive Proben lagen.

Die restlichen Proben werden nicht getestet, sondern nur dosiert und gemischt.

Parallel dazu kann ein die Proben abdeckendes Öl und bei Bedarf Reagenzien getaktet aufgebracht werden durch mehrmaliges Kippen in abwechselnde Schräglagen der Vorrichtung.

Falls die Probenweitergabe in mindestens einer Probenkammer ausfällt, bleibt dies nicht unbemerkt, da dann auch in der Wurzel der gesamten Vorrichtung keine Mischprobe ankommt.

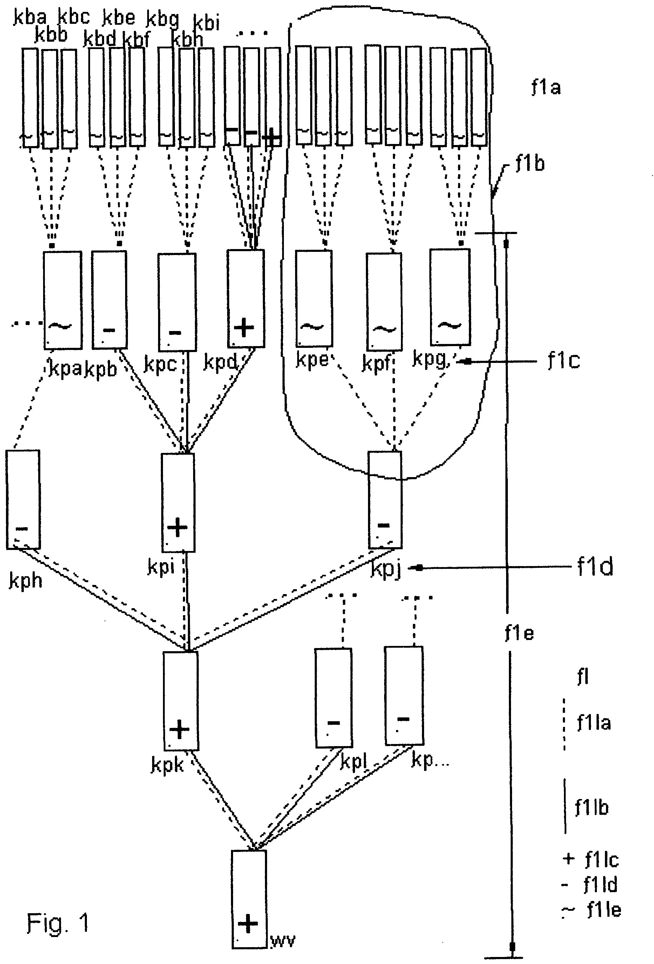

Fig. 1. zeigt einen typischen, baumartigen Aufbau einer Vorrichtung mit mehreren, miteinander verbundenen Probenkammern. Von den Blattknoten [kb] her wird zur Wurzel [wv] hin pro Knoten [kp] der Sammelstatus aus den t ihm logisch untergeordneten [kn] Knoten gebildet, um Ausschluss von negativen Teilbäumen [bt] statt Einzelproben [kb] zu ermöglichen und dadurch logarithmischen Aufwand zu erreichen. Die Wurzel [wv] ist der allen Knoten logisch übergeordnete Knoten, alle anderen Knoten sind seine Nachfolgerknoten [kn] bis hin zu den Blattknoten [kb]. Physisch werden die die Knoten verbindenden Kanten durch Leitungen bzw. nach einer weiteren Ausgestaltung der Erfindung durch Saugheber realisiert und entsprechen die Einzelproben den Blattknoten und sind diese Blattknoten oben und die Wurzel unten angeordnet wie bei natürlichen Bäumen und entgegen der in der Informatik meist üblichen Baumdarstellung.

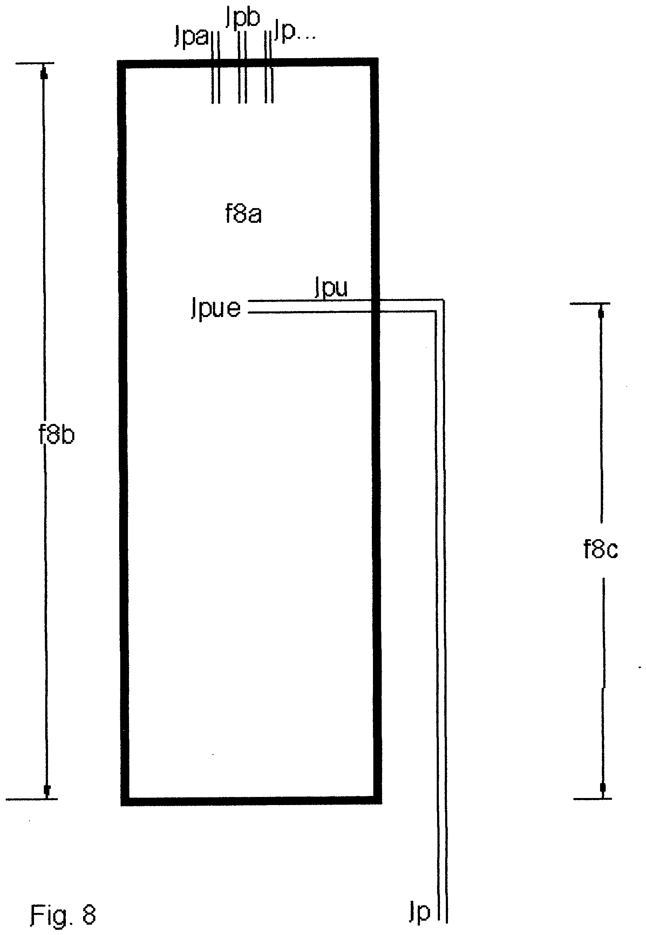

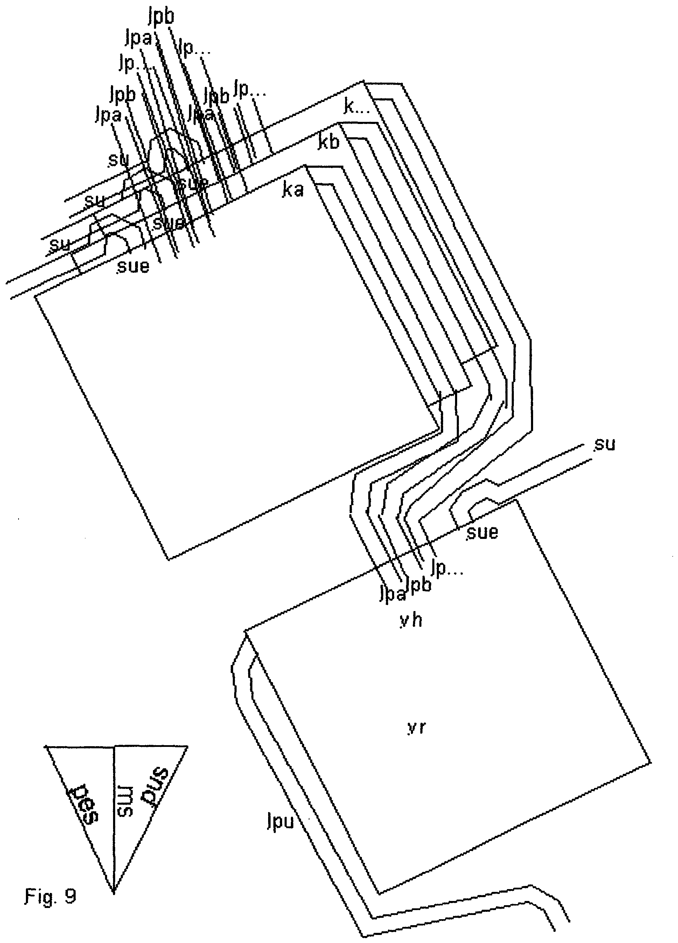

Fig. 8 zeigt den Prinzipaufbau einer Proben-Kammer mit Proben-Überlauf gemäß Anspruch 1., hier in einer 3-ären (t = 3) Vorrichtung, wie sie in Fig. 9 für 3 hydrostatisch höherliegende Probenkammern gezeigt wird. Etwa ein t-tel [vh] des entstehenden Mischprobenvolumens [vp] fließt - hier noch ohne feinere Dosierung - sofort über [lpue], [lpu] und [lp] weiter zur logisch übergeordneten Probenkammer. In der Probenrückhaltekammer [kr] verbleibt eine Mischprobe des Volumens [vr]=((t-1)/t) des Probengesamtvolumens [vp].

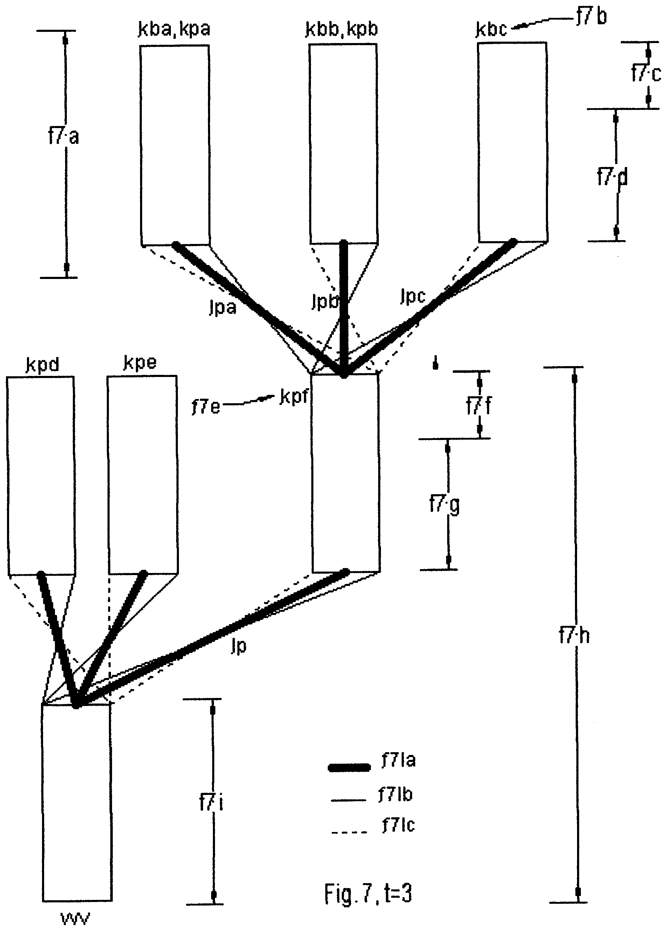

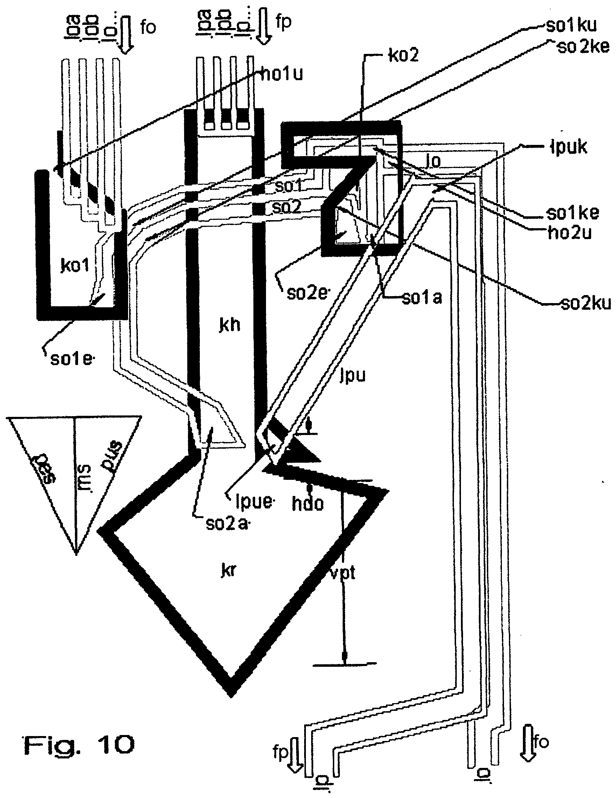

Fig. 7 zeigt den zugehörigen Prinzipaufbau einer Vorrichtung mit Proben-Überlauf gemäß Anspruch 1. in 3-ärer Ausführung. Über Proben-Überlaufleitungen [lpa,lpb,lp...] werden alle Proben von den Einzelproben [kpa,kpb,kp...] in den Blattknoten [kba,kbb,kb...] her in Richtung Wurzel [wv] der Vorrichtung rekursiv gemischt. Die gezeigten Öl-Leitungen [lo...] sind optional und fallen erst im Zusammenhang mit Fig. 10. an. Die gezeigten Druckausgleichs-Leitungen [ld...] sind optional, wenn andere Druckausgleichsmöglichkeiten vorgesehen werden, im einfachsten Fall z.B. Öffnungen zum die Vorrichtung umgebenden Raum hin. Sie sollen ggf. die Anfälligkeit für Kreuzkontamination verringern.

Die grundlegende Mindest-Reihenfolge des Verfahrens ist:
- von den Blattknoten (Einzelproben) [pe] bis in die Wurzel [wv]:
   • • Mischen von je t zu testenden Proben (Einzelproben [pe] oder Mischproben [pm]) oder negativen Dummyproben [p0] aus deren t Proben-Kammern [kn] zu einer Mischprobe [pm] in einem Knoten [kv] der logisch nächst-übergeordneten Ebene,
   • • je nach Testart: Amplifikation als Kompensation der mit dem Mischen verbundenen Verdünnung,
- von der Wurzel her in Richtung Blattknoten durch alle Knoten mit nicht implizit negativen Proben, jeweils rekursiv bis ein Blattknoten (Einzelprobe)[pe] erreicht ist:
   • • Testen der Probe.

### Dabei bedeutet

• positiv: Probe in diesem Knoten wurde getestet und dabei positiv gefunden, in Fig. 1 mit "+" dargestellt,
• negativ:
   • • Probe in diesem Knoten wurde explizit getestet und dabei negativ gefunden, , in Fig. 1 mit "-" dargestellt, oder
   • •der Sammelstatus einer Probe in einem der Vorgängerknoten (logisch übergeordneten Knoten) ist negativ, all dessen Nachfolgerknoten sind also implizit negativ, in Fig. 1 mit "∼" dargestellt,
• zu testen: weder explizit noch implizit als negativ bekannt.

Weitere Zwischenschritte können nötig sein:
- Amplifikation bedingt i.d.R. vorheriges Verschließen der Rückwege zwecks Vermeidung von Kreuzkontaminationen,
- Amplifikation bedingt i.d.R. vorherige Präparation, z.B. DNA-Extraktion bei PCR (jede nur zur Testung erforderliche Präparation dagegen ist implizit und damit proportional im Testaufwand enthalten),
- Amplifikation kann nochmalige Sterilisation (z.B. durch UV-Licht) vor Einbringen der Einzelproben nötig machen.

Bei einer Vorrichtung nach Anspruch 1. ohne Taktung pflanzt sich eine bautoleranzbedingte Einfüllverzögerung bis zur Wurzel [wv] fort mit der Auswirkung, dass rekursiv in jeder Mischprobe [ki], in der die Mischprobe eines Zweiges sowieso unterrepräsentiert eingeht, dieser durch nochmalige Verzögerung noch unterrepräsentierter weitergegeben wird, sodass auch der Fehler im Mischverhältnis und damit die Gefahr des Unterschreitens eines für die sichere Testung mindestens nötigen Einzelvolumen-Anteils bis zur Wurzel immer größer wird. Durch Taktung der Mischvorgänge nach Anspruch 7. wird dieser Fehler verringert.

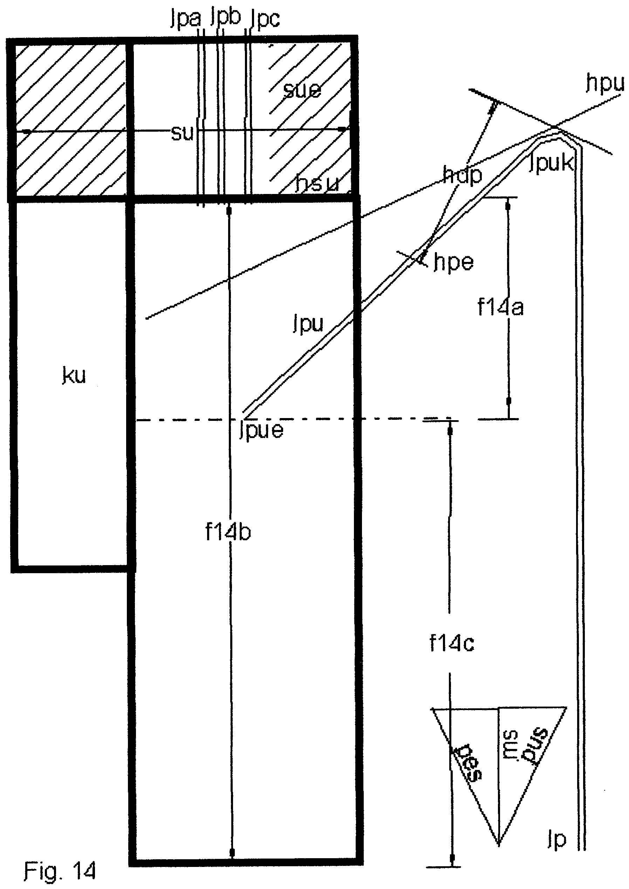

Damit jede Probe annähernd gleich stark in den hierarchisch zu testenden Mischproben vorkommt, wird eine möglichst genaue 1/t-Dosierung angestrebt. Diese 1/t-Dosierung ist um so genauer, wo gilt:
- Mischproben [pm] werden mit Hilfe von Saughebern dosiert, bei denen mindestens eine Öffnung möglichst weit von der Mittenachse [ms] entfernt liegt und die über alternierende Schräglagen [pes] und [pus] der Probenkammern getaktet werden.
- Dabei muss den Proben genügend Zeit bis zum nächsten Überlauf gelassen werden, um in [kv] vollständig einzulaufen und in [kn] vollständig auszulaufen.
- In Probenüberlaufposition [pus] ist der Niveauunterschied [hdpu] zwischen [hpu] und [lpuk] möglichst groß, unterstützt durch die alternierenden Schräglagen.
- Die Fläche am Übergang zwischen Probenkammerhals [kh] und Probenrückhaltekammer [kr] ist möglichst klein.
- Ein bautoleranzbedingter, überschüssiger Probenanteil oberhalb [sue] fließt über einen Probenüberfluss-Schacht [su] gem. Fig. 14 in die Probenüberfluss-Kammer [ku] ab.
- Der Probenüberflusseingang [sue] ist dafür gerade so breit, dass der (probenmaterialbedingt und bautoleranzbedingt unterschiedlich hohe) überschüssige Probenanteil ungehindert abfließen kann.
- Für alle Flüssigkeitsbewegungen existiert Druckausgleich.

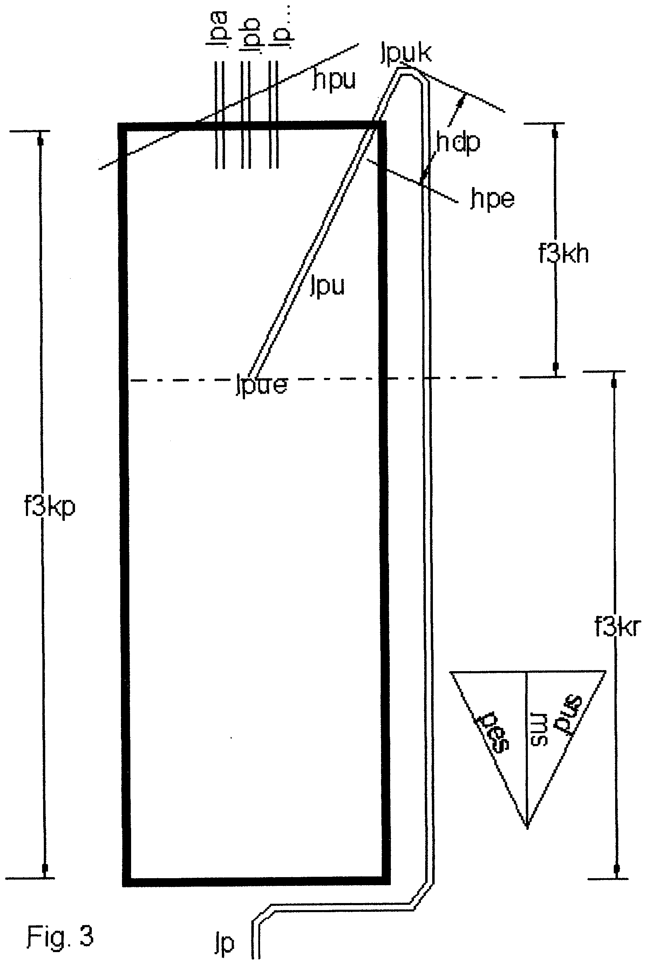

Durch Einsatz von Proben-Saughebern nach Fig. 3 wird Folgendes erreicht:
- In Einfüllschräglage [pes] verhindert die Höhendifferenz zwischen [lpuk] und [lpue] ein ungetaktetes, vorzeitiges Abfließen der Probe aus dem Probenkammerhals [kh].
- Dabei reicht eine um so kleinere Schräglage [pes] aus, je weiter das aktuell höher liegende Niveau (hier [lpuk]) von der Mittenachse [ms] entfernt liegt.
- Zwecks Überlaufs braucht die Probenhöhe [hpu] nur kurzzeitig höher liegen als die Probenüberlaufkuppe [lpuk] des Saughebers, danach genügt die Niveaudifferenz zwischen [lpue] in [kn] und [lpa, lpb bzw. lp...] in [kv] für den vollständigen Überlauf nach [kv].
- Die Dosiergenauigkeit wird zusätzlich erhöht.

Durch Einsatz von abdeckendem Öl und Öl-Saughebern nach Fig. 10 wird Folgendes erreicht:
- Öl-Kammer [ko2] lässt leichteres Öl bei [so2a] von oben auf den zurückgebliebenen Mischprobenteil in der Probenrückhaltekammer [kr] abfließen.
- Dadurch deckt das Öl die Probenrückhaltekammer [kr] ab und verschließt außerdem den Eingang [lpue] der Probenüberlaufleitung [lpu], die zur nächsten mischenden Probenkammer in [kv] führt und dadurch Kreuzkontamination begünstigen würde.
- Die Probenkammern werden in der Höhe kompakter, da das Öl-Niveau in [so1ku] nur kurzzeitig höher liegen muss als das in [ko2], danach genügt die Öl-Niveaudifferenz zwischen [ko2] und [ko1] für den vollständigen Öl-Überlauf nach [ko2], wobei [ko2] und [ko1] möglichst weit von der Mittenachse [ms] entfernt liegen sollten.
- Durch Zwischenschalten einer ersten Öl-Kammer [ko1] wird das Öl um eine Schräglage verzögert weitergegeben, also erst nach Probenüberlauf aus dem Probenkammerhals [kh] über [lpuk].

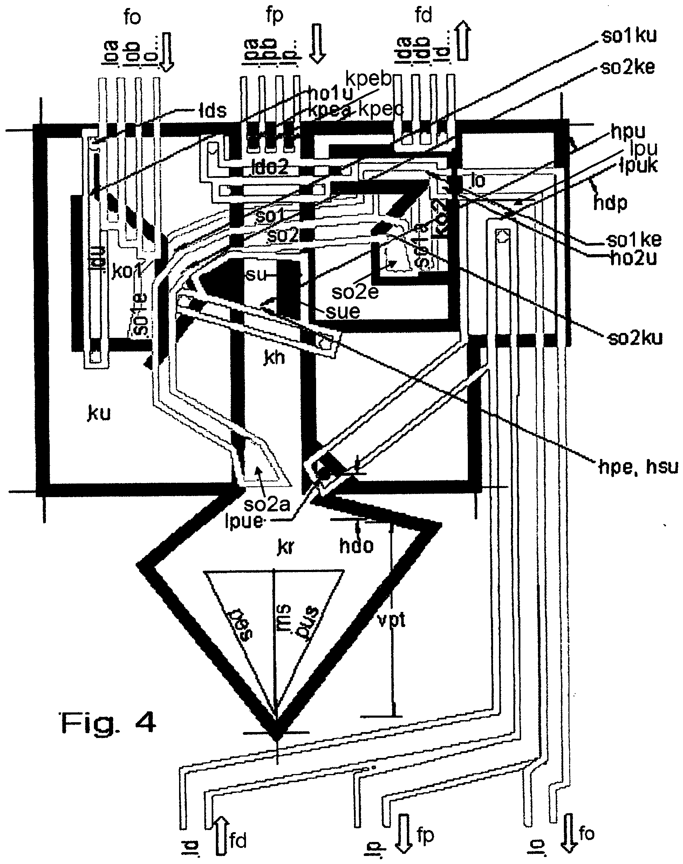

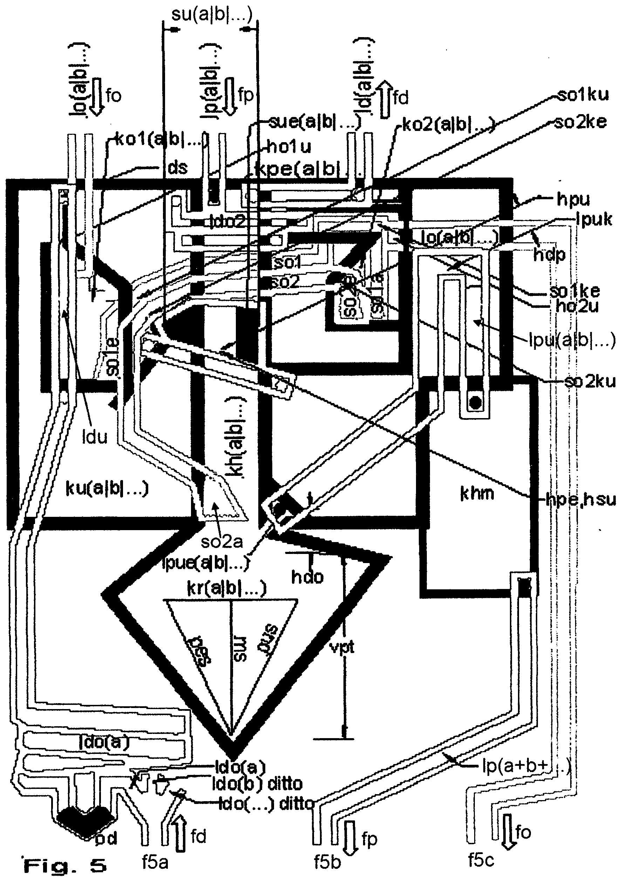

In einer Kreuzkontamination möglichst sicher vorbeugenden, in sich geschlossenen Vorrichtung gilt:
- Der Druck sollte über dafür vorbehaltene Leitungen [lda,ldb,ld...] in Fig. 4 oder besser ld(a|b|...) in Fig. 5 in Richtung Einzelproben ausgeglichen werden.
- Anders als in Fig. 4 sollten die Druckausgleichsleitungen [lda,ldb,ld...] möglichst keine direkte Verbindung zu einer gemeinsamen, mischenden Probenkammer haben, da sonst über diese die Gefahr von Kreuzkontamination droht. Statt die t Proben gleich in [kr] und [kh] zu mischen, fließt deshalb in Fig. 5 z.B. die Probe aus [lp(a)] in einen [kh(a)] der t separaten Kammerhälse [kh(a|b|...)], dessen Druckausgleich [ld(a)] keine Verbindung zu Elementen der anderen t-1 Probenkammern hat.

Falls die Anzahl der Einzelproben [kb] kleiner als t hoch h-1 ist (nicht-voller Baum), können die fehlenden Einzelproben durch neutrale Pseudoproben [p0] ersetzt werden, um den Überlauf einzuleiten. Im Rahmen dieser Erfindung wird h ab 1 gezählt.

Da mit steigendem h auch die Verdünnung der Proben exponentiell, nämlich pro Höhenstufe um den Faktor t, steigt, ist die Anzahl m der in eine einzige Vorrichtung einbringbaren Einzelproben in der Praxis beschränkt, kann aber bei geeigneter Probenart durch Amplifikation (z.B. PCR oder Kultur) erhöht werden.

Ob von vornherein alle Baumknoten oder nur bei Bedarf die innerhalb der testpositiven Pfade liegenden mit Testreagenzien etc. beschickt werden, kann u.a. nach dem Arbeitsaufwand, dem Automatisierungsgrad, den Materialkosten, dem Spül- und Sterilisier- und / oder Entsorgungs-Aufwand und den Kreuzkontaminations-Erfahrungen optimiert werden.

Fig. 14 zeigt eine Probenkammer mit einem horizontal verlaufenden Überfluss-Schacht [su] nach Anspruch 6., durch den überschüssige Probenanteile aus dem Probenkammerhals [kh] in eine Überfluss-Kammer [ku] abfließen. Der Schacht ist hierfür geeigneter als ein Überfluss-Saugheber, da ein Saugheber einen ununterbrochenen Fluss voraussetzen würde, der bei Probeneinlauf aus mehreren Leitungen [lpa,lpb,lp...] nicht sichergestellt wäre. In Probeneinlaufschräglage [pes] ist die Probenüberlaufkuppe [lpuk] auf einem höheren hydrostatischen Niveau als das Niveau [hpe] der eingelaufenen Probe, deren Differenz [hdp] verhindert also einen Probenüberlauf über [lpuk]. Überschüssige Probenmengen fließen also aus der Probenkammer [kp] über den Eingang [sue] des Überflussschachtes [su] in die Überflusskammer [ku] ab.

In Probenüberlaufschräglage [pus] dagegen ist der Überflussschacht wirkungslos und verhält sich die Probenkammer wie die in Fig. 3.

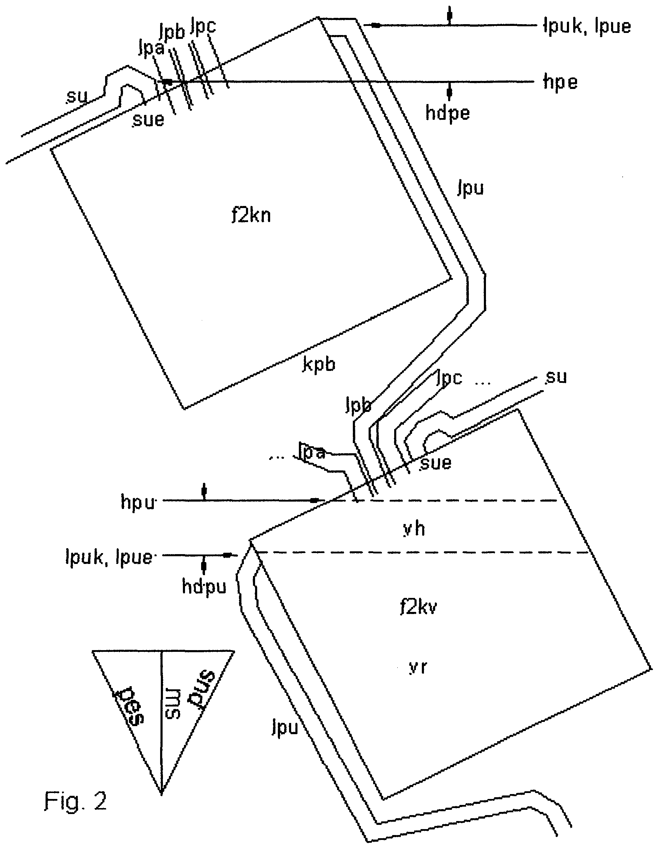

Fig. 2 zeigt eine Vorrichtung zur Taktung des Mischvorgangs. Aus t hydrostatisch höher liegenden Probenkammern fließt jeweils ein t-tel der Probe durch eine Probenüberlaufleitung [lpu] in eine der t Proben-Eingangsleitungen [lpa,lpb,lp...], hier gezeigt für [lpb] und angedeutet für [lpa] und [lp...]. Die Probenüberlaufkuppen [lpuk] der beiden Probenkammern sind hier um 180 Grad gegeneinander gespiegelt, damit in ein und der gleichen Schräglage
- die eine Probenkammer in Probeneinfüllschräglage [pes] ist und die Probenniveaudifferenz [hdpe] einen Probenüberlauf verhindert, weil die Probenüberlaufkuppe [lpuk] höher liegt als das Probeneinfüllniveau [hpe], das solange ansteigt, bis überschüssige Mengen über einen Probenüberflussschacht [su] mit Eingang [sue] abfließen,
- die andere, hier [kpb], in Probenüberlaufschräglage [pus] ist und die Probenniveaudifferenz [hdpu] einen Probenüberlauf des Volumens [vh] einleitet, sobald das Probenniveau [hpu] höher liegt als die Probenüberlaufkuppe [lpuk].

Saugheberwirkung ist dafuer noch nicht nötig, sondern der Probenüberlauf-Eingang [lpue] darf hier mit der Probenüberlauf-Kuppe [lpuk] zusammenfallen.

Fig. 3 zeigt den Prinzipaufbau einer Proben-Kammer mit Saughebern zwecks Taktung des Dosierungs- und Mischvorgangs gemäß Anspruch 5., hier in einer 3-ären (t = 3) Vorrichtung. In Proben-Einfüllschräglage [pes] liegt die Probenüberlaufkuppe [lpuk] um [hdp] höher als Höhe [hpe] der durch die Probeneingangsleitungen [lpa,lpb,lp...] eingebrachten Mischprobe und verhindert dadurch einen Probenüberlauf. In Proben-Überlaufschräglage [pus] dagegen ist das hydrostatische Niveau [hpu] der Mischprobe in der Probenkammer [kp] höher als das der Probenüberlaufkuppe [lpuk]. Deshalb fließt das Probenvolumen [vh] aus dem Probenkammerhals [kh] über den Probensaugheber [lpu] ab dessen Eingang [lpue] über die Probenüberlaufkuppe [lpuk] zum Ausgang [lp] ab. In der Probenrückhaltekammer [kr] bleibt ein Probenvolumen [vr] ((t-1) t-tel des Probenvolumens [vp]) stehen und kann für Tests gem. Fig. 1 verwendet werden.

Fig. 10 zeigt die Ausgestaltung einer Proben-Kammer der Vorrichtung nach Unteranspruch 8. mit zwei Ölkammern [ko1] und [ko2], die dafür sorgt, dass Öl um zwei Schräglagen verzögert auf eine nach Probenüberlauf in der Probenrückhaltekammer [kr] verbleibende Probenmenge [vr] abfließt, die Probe und den Probensaugheber abdeckt und dadurch Kreuzkontamination-hemmend wirkt:
- Schräglage 1: In Probeneinfüllschräglage [pes] ist auch die erste Ölkammer in Einlaufschräglage und nimmt aus hydrostatisch höher liegenden t Probenkammern abfließendes Öl über Öl-Eingangsleitungen [loa,lob,lo...] auf. Überschüssige Öl-Mengen fließen gleich über [ho1u] ab. Eine vorzeitige Weitergabe des Öls an [ko2] wird dadurch verhindert, dass die Saugheberkuppe [solke] auf höherem hydrostatischem Niveau liegt als die Saugheberkuppe [so1ku].
- Schräglage 2: Sobald die Vorrichtung in Probenüberlaufschräglage [pus] gekippt wird, wird das hydrostatische Niveau des Öls bei [ho1u] größer als das bei [so1ku] und lässt das Öl über einen Öl-Saugheber [so1] abfließen in die zweite Ölkammer [ko2], während eine Probenmenge aus dem Probenkammerhals [kh] durch einen Probensaugheber [lpu] über eine Probenüberlaufkuppe [lpuk] abgesaugt wird. [ko1] hat also sowohl eine dosierende als auch eine taktende Wirkung. Ein vorzeitiges Abfließen des Öls zur Probe über den Ausgang [so2a] des zweiten Öl-Saughebers [so2] wird dadurch verhindert, dass die Saugheberkuppe [so2ke] auf höherem hydrostatischem Niveau liegt als das Öl im höchsten Punkt [ho2u] der zweiten Ölkammer [ko2]. Durch die Schräglage [pus] fließt zusätzlich zum Probenteil aus [kh] eine Probenschicht der Dicke [hdo] aus der Probenrückhaltekammer [kr] ab, dadurch wird der Proben-Saughebereingang [lpue] freigelegt und für verschließendes Öl zugänglich.
- Schräglage 3: Durch Zurückkippen der Vorrichtung in die Probeneinfüllschräglage [pes] kommt das Öl im höchsten Punkt [ho2u] der zweiten Probenkammer [ko2] auf ein höheres hydrostatisches Niveau als das in der Saugheberkuppe [so2ku]. Das Öl fließt daher über den Saugheber [so2] zu dessen Ausgang [so2a] und legt sich in der durch Probenüerlauf freigewordenen Schicht [hdo] auf das in [kr] verbliebene Probenvolumen [vpt] und vor den Probensaughebereingang [lpue]. Parallel dazu startet im logischen Vorgängerknoten ein nächster Zyklus mit Probeneinfüllung etc. wie in Schräglage 1.

Fig. 4. zeigt eine typische, im physischen Modell getestete Probenkammer. Sie vereint den Proben-Toleranzüberfluss gem. Fig. 14, Saugheber gem. Fig. 3, Probenmisch-Taktung gem. Fig. 2 und Öl-Taktung gem. Fig. 10.

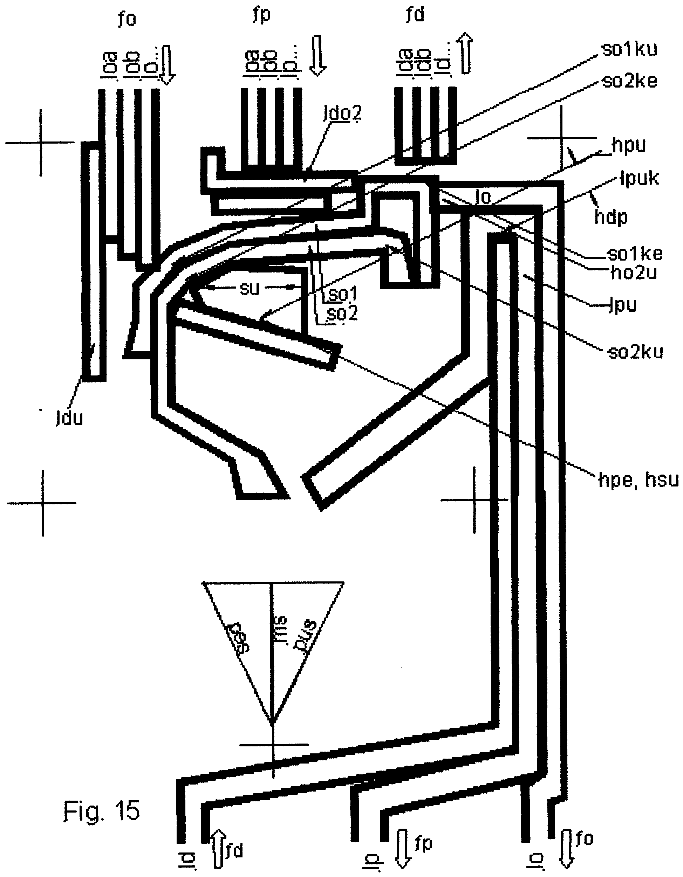

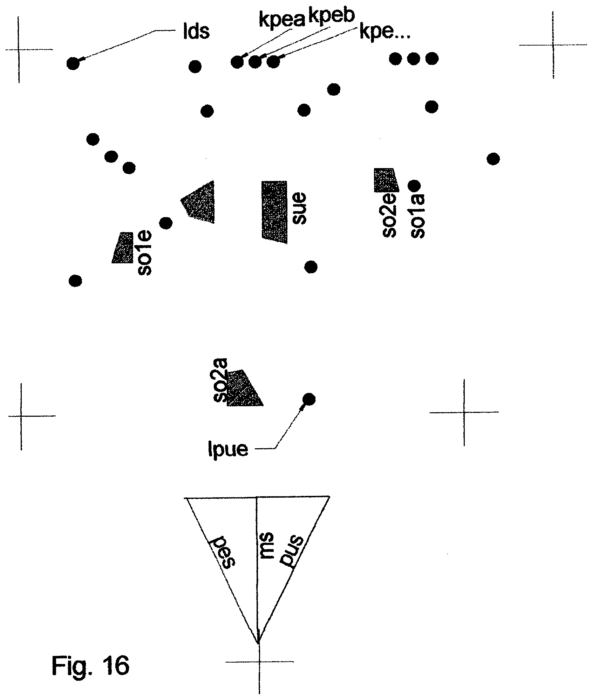

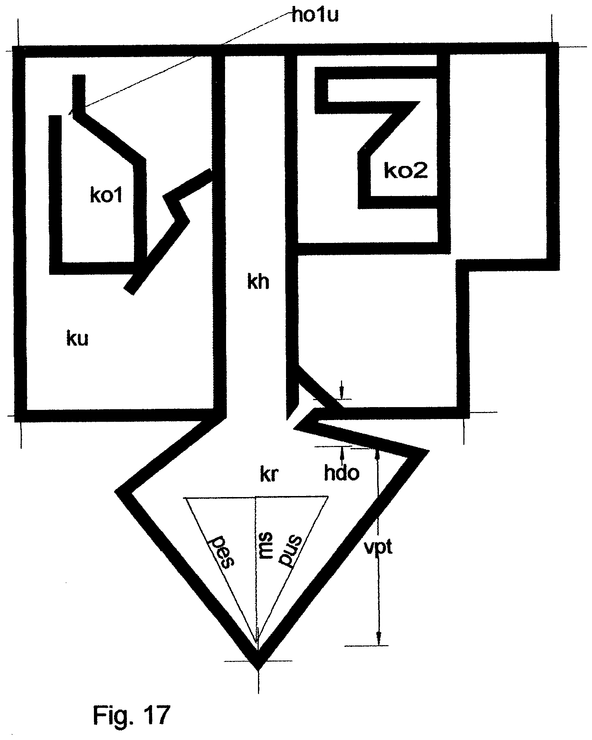

Dabei besteht die Probenkammer aus folgenden als CAD-Layers gezeigten Schichten:
- einer abschließenden hinteren durchgehenden Platte mit Aufhängungspunkten für Einfüll- und Überlauf-Schräglagen
- einem Layer mit den Wänden von Leitungen bzw. Saughebern und Querschacht, gezeigt in Fig. 15
- einer den Leitungs- und den Kammer-Layer voneinander trennenden Platte mit Löchern und Durchbrüchen als Verbindungen zwischen Leitungs- und Kammer-Layer, gezeigt in Fig. 16
- einem Kammer-Layer, in dem die Kammerwände zur Aufnahme von Probe, Öl und Luft untergebracht sind, gezeigt in Fig. 17
- einer abschließenden vorderen durchgehenden Platte.

Fig. 5 trennt zwecks Kreuzkontaminationsminderung die in Fig. 4 noch für t Proben benutzten Kammern in t Kammer-Layers auf, einen für je eine Probe. Damit nicht in Probenüberlaufschräglage Kontaminationen aus der logisch übergeordneten Probenkammer [kv] über die Druckausgleichsleitung ([ld] in Fig. 4 bzw. [ld(a+b+...)] in Fig. 5) zurückkommen, wird bei [lda+b+...] eine Leitungsverzweigung vorgesehen, welche den aus [kv] zurückkommenden Sammeldruck auf t Leitungen [ldo(a),ldo(b),ldo(...)] verteilt,
- die das gesamte Druckausgleichs-Volumen aufnehmen und
- deren t Eingänge jeweils mit einem großen, bei Druck wandernden Öl-Tropfen [od] abgedichtet sind und
- die jede für sich in die Probenüberflusskammer [ku(a|b|...)] der zugehörigen Probe führt und
- dort den durch Probenüberlauf über [lpu(a|b|...)] entstehenden Unterdruck ausgleicht.

Nur die ausgangsseitige Probenmischkammer [khm] und die gemeinsame ProbenAusgangsleitung [lp(a+b+...)] überspannen diese t zusätzlichen Kammer-Layers.

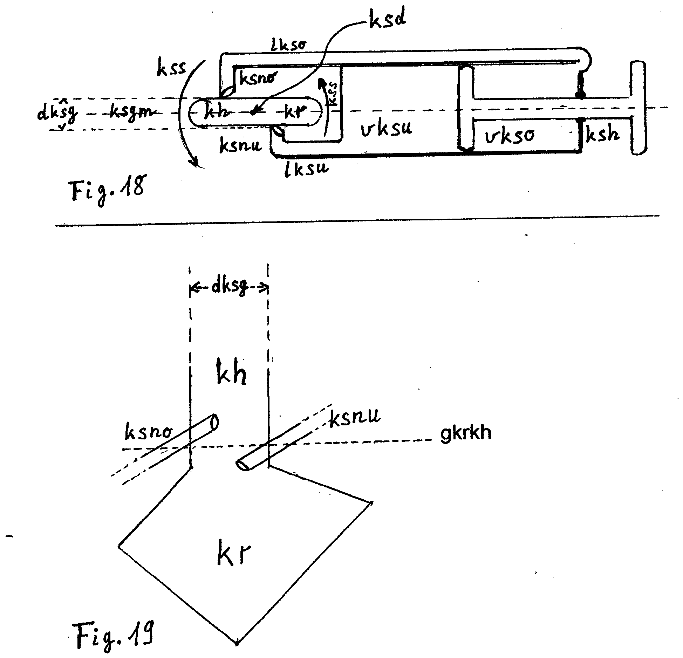

Fig. 18 und Fig. 19 zeigen eine Möglichkeit, mittels einer in die Probenrückhaltekammer [kr] eingeführte Kanüle [ksnu] aus [kr] eine Probe abzusaugen bzw. Reagenzien in [kr] einzubringen, wobei der Druckausgleich kreuzkontaminationshemmend über eine zweite, in den Probenkammerhals [kh] eingeführte Kanüle [ksno] erfolgt, die über die Leitung [lkso] in den geschlossenen Raum [vkso] hinter dem Spritzenkolben führt. Beide Kanülen können durch eine Schraubbewegung um einen Spritzengabel-Drehpunkt [ksd] herum gleichzeitig eingeführt werden, [ksno] setzt so hoch an, dass sie in [kh] einsticht. [ksnu] setzt so tief an, dass sie in [kr] einsticht.

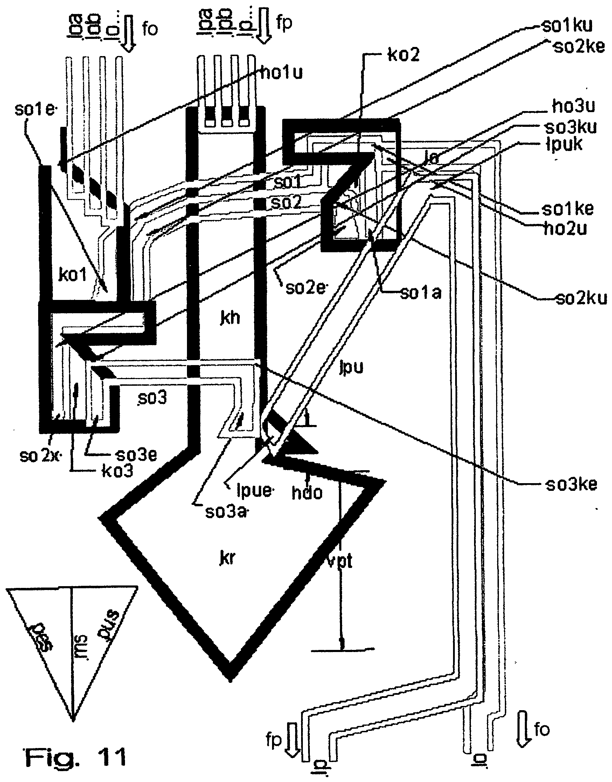

Fig. 11 zeigt eine Probenkammer mit zusätzlichen Leitungen und Kammern für die Einbringung und Weitergabe von Reagenzien.

Eine dritte Öl-Kammer [ko3] puffert das Öl um eine weitere Schräglage zwischen, während derer Reagenzien in die nach Probenüberlauf in der Probenrückhaltekammer [kr] verbliebene Probe fließen. Für die Reagenzien kann das System der Öl-Kammern und - leitungen nach Fig. 10 dupliziert werden, im Modell z.B. als weiterer Layer auf der anderen Seite des Kammerwände-Layers, sodass von einer Seite die Reagenzien in [kr] einfließen und von der anderen Seite eine Schräglage später das Öl aus der dritten öl-Kammer [ko3].

Wo Öl-Kammern und Reagenzien-Kammern den gleichen Raum im Kammerwände-Layer beanspruchen, können sie jeweils z.B. als Sandwich aus zwei Kammern ausgeführt werden.

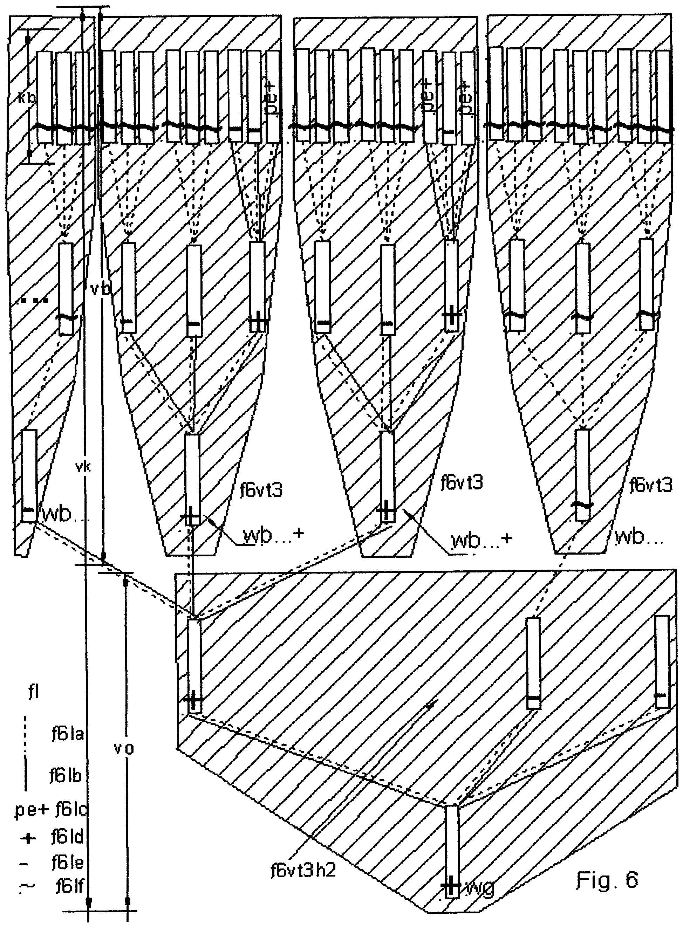

Zwecks Durchführung eines großen Reihentests können mehrere Vorrichtungen zu einer Vorrichtungen-Kaskade [vk] wie in Fig. 6 gezeigt kaskadiert werden und dadurch einen gemeinsamen Baum bilden, wobei die Wurzeln [wua,wub,wu...] aller zu den Blattknoten hin gelegenen, logisch untergeordneten Vorrichtungen ihrerseits wieder jeweils in eine logisch übergeordnete Vorrichtung [vo] münden.

Zwecks Aufwandsminimierung können die Einzelproben optional nach Positivwahrscheinlichkeit vorsortiert werden. Danach kann das restliche Auffüllen einer wahrscheinlich soweit test-negativen äußersten Vorrichtung mit neutralen Pseudoproben [p0] günstiger sein als das Einbringen weiterer Proben mit höherer bzw. unbekannter Positivwahrscheinlichkeit.

Zur international eindeutigen Proben-Identifikation auch bei umfangreichen und / oder kaskadierten und / oder zeitlich oder örtlich verteilten Reihentests bietet sich ein für Blatt- und interne Knoten einheitliches Nummerierungs-Schema an: jede Proben-Kammer [kp], auch die der Einzelproben, wird bedruckt oder sonstwie physisch markiert mit einer Proben-Identifikationsnummer, die als Klartext und maschinell lesbar ist und sich zusammensetzt aus:
- einer vom Patentgeber oder von einer internationalen Einrichtung vergebenen, international eindeutigen Hersteller-Nummer, z.B. in der Art "AA", "AB", "AC" usw. bis "ZZ",
- international eindeutigem Trennzeichen,
- seitens des jeweiligen Herstellers vergebenen, durch jeweiliges Inkrementieren eindeutiger Vorrichtungs-Nummer in der Art "AAAA", "AAAB", "AAAC" usw. bis "ZZZZ",
- zweitem international eindeutigem Trennzeichen,
- Knoten-Nummer innerhalb der Vorrichtung in einer t-ären (im folgenden Beispiel 3-ären) Klassifikation, nämlich:
- für die Wurzel der Vorrichtung "0" oder nichts weiteres,
- für die t direkten Nachfolger der Wurzel:
   "1", "2", "3",
- für deren t Nachfolger:
   "11", "12", "13",
   "21", "22", "23" etc.,
- für wiederum deren t Nachfolger:
   "111", "112", "113",
   "121", "122", "123" etc.,
- wobei, falls t größer als 9 (also selbst mehrstellig) ist, "A" statt "10" verwendet wird, "B" statt "11" usw.

### Erzielbare Vorteile:

Der Handling-Aufwand und der minimale, der mittlere und der maximale Testaufwand werden drastisch reduziert (erfindungsgemäß geringen Anteil positiver Proben vorausgesetzt).

Der Testaufwand wird auf ein logarithmisches Maß verringert.

Entsprechend gering können die Gesamtkosten ausfallen selbst bei höheren Kosten des Einzeltests.

Die drastische Verringerung der durchzuführenden Tests erlaubt auch den Einsatz von
- hochsensiblen amplifizierenden Tests und / oder
- früh anzeigenden Direkt-Tests, wo bisher auf Antikörper getestet wurde und daher eine mehrmonatige Latenzzeit hingenommen werden musste, wie z.B.
- PCR zum Krankheitserreger-Screening z.B. bei Blutkonserven und Blutprodukten oder bei BSE- oder Vogelgrippe-Screening statt Massen-Keulen nach dem Tierseuchengesetz oder
- Anzucht von Krankheitskeimen bei regionalen Trinkwasseruntersuchungen - auch in Entwicklungsländern. Die einfache Bauweise und Handhabung der Erfindung macht es dabei möglich, dass ein Entwicklungsland nicht nur Absatzgebiet sondern auch selbst Hersteller und Anwender wird.

Auch eigentlich analoge, d.h. nicht auf positiv oder aber negativ testende Tests könnten künftig dem hier offenbarten Verfahren zugänglich werden, wo es gelingt,
a) einen testspezifischen Schwellwert zu definieren und
b) eine Amplifikationsmethode zu finden, die die zu messende Probeneigenschaft wertmäßig in die Nähe dieses Schwellwertes bringt, z.B. durch eine Abfolge von alternierenden Schräglagen mit schwellwert-spezifischer Dauer.

Dabei verursacht eine zu geringe Spezifität zwar unnötige Kosten, aber kein Falschnegativ-Risiko, und ist daher tolerierbar. Auch eine zu hohe Sensitivität mit vielen falschpositiven Screening-Ergebnissen ist tolerierbar, wenn alle positiv gefundenen Proben mit genaueren Verfahren nochmals getestet werden. Beispiele für Schwellwerte sind eine Mindestanzahl Schimmelsporen pro Messvolumen Luft oder eine Mindestanzahl bestimmter Krankheitskeime pro Messvolumen Trinkwasser.

Der Test-Aufwand bei 0 positiven Einzelproben (p=0) beträgt
- pro Vorrichtung: 1,
- pro Vorrichtungen-Kaskade: 1.

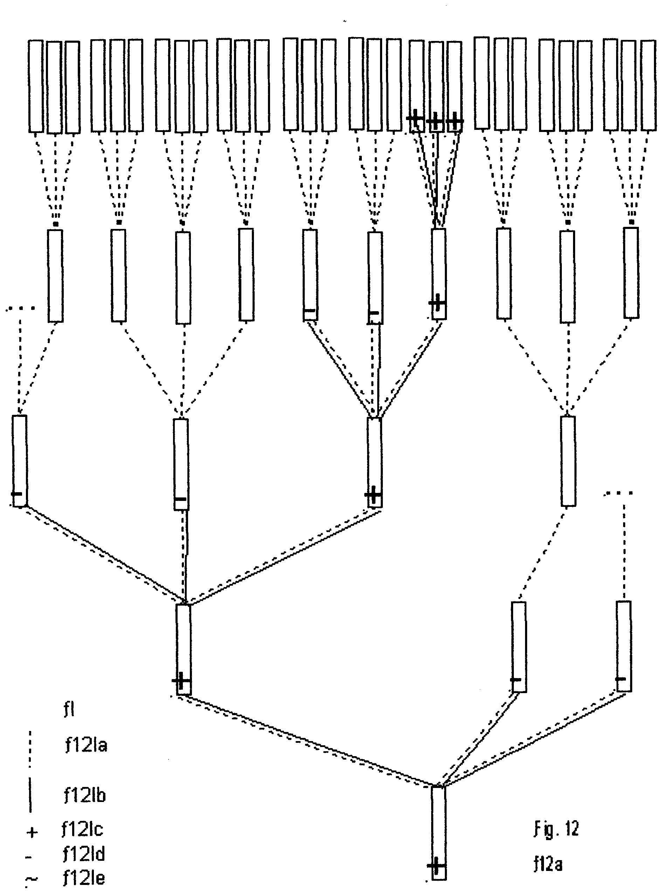

Fig. 12 zeigt die Suchpfade durch eine Vorrichtung mit t=3, und zwar - im Gegensatz zur Richtung beim Mischen - nun von der Wurzel [wv] her entlang aller testpositiven internen Knoten bis in die die Blattknoten repräsentierenden Einzelproben [pe]. Dabei wird hier eine dichte Verteilung (Vorsortierung) der positiven Proben gezeigt, wodurch minimaler Testaufwand entsteht, weil ab einer negativ getesteten Probe deren gesamter Teilbaum in Richtung Blattknoten implizit negativ ist. Nach Simulationsergebnissen erzeugen bei Gleichverteilung z.B. 5% Positivrate ca. 43% des linearen Testaufwandes, dagegen bei dichter Gruppierung der positiven Proben nur ca. 7,5% für t=3 bzw. 6,6% für t=4. Bei 1% Positivrate reduziert Vorsortierung den Testaufwand von 14% auf ca. 1,4% des linearen.

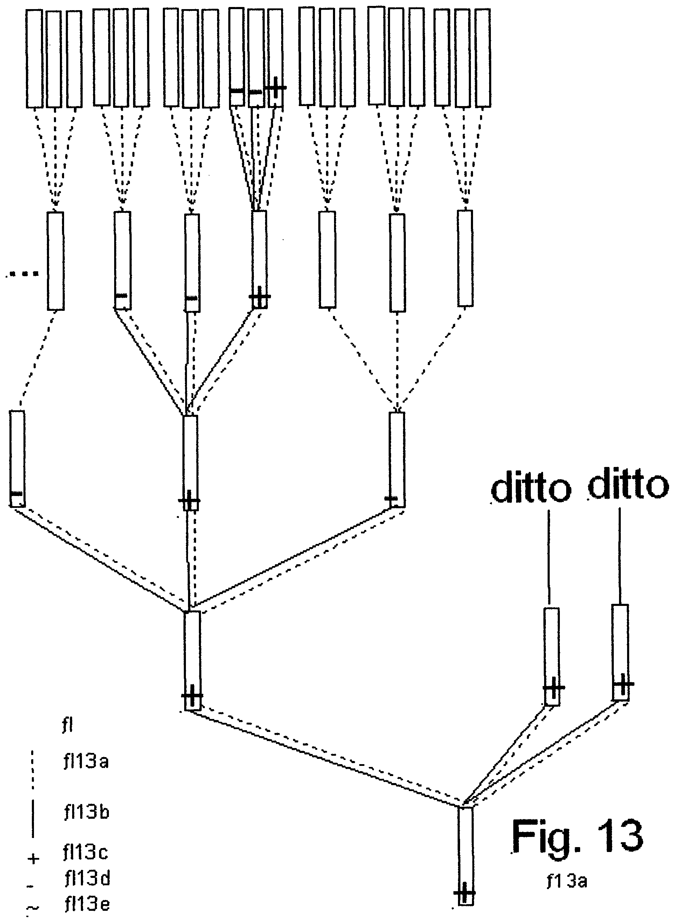

Fig. 13 ist ähnlich der Fig. 12, jedoch bei gleichmäßiger Verteilung (keine Vorsortierung) der positiven Proben, wodurch maximaler Testaufwand entsteht.

Für den mittleren Testaufwand ist der maximale anzusetzen, es sei denn, die Proben werden nach Positiv-Wahrscheinlichkeit vorsortiert angeliefert.

Zusammen mit dem eigentlichen Testaufwand können auch der Präparations- und / oder der Amplifikations-Aufwand ggf. verringert werden.

Da jedes positive Testergebnis eines internen Knoten in seinen Nachfolgerknoten wiederholt geprüft wird, kann die Testung der internen Knoten [ki] auf größtmögliche Sensitivität und weniger auf Spezifität optimiert werden. Die Spezifität braucht erst in den Blattknoten (Einzelproben) [kb] sichergestellt werden.

Zur Sicherheitsprüfung, ob wirklich alle Proben in den Sammelstatus eingeflossen sind oder aber mindestens eine Probe auf dem Weg in Richtung Wurzel blockiert war, braucht nur die Wurzel der Vorrichtung bzw. der Vorrichtungen-Kaskade kontrolliert werden, da für jeden mischenden Überlauf jeweils alle t Proben nötig gewesen sind und bei Ausbleiben mindestens einer Probe auch die Wurzel leergeblieben wäre.

Zur Funktionskontrolle der Reagenzien und sonstigen Komponenten können beliebige Probenkammern im Baum mit positiven Test-Proben beschickt werden.

Durch Verwendung von Überlaufleitungen [lpu] bzw. Saughebern [lpu] statt Pipettierens wird der mechanische Aufwand minimiert und die Bildung des Sammelstatus in jedem internen Knoten [ki] nahezu selbsttätig ausgeführt.

Durch das via Überlaufleitungen [lpu] bzw. Saugheber [lpu] selbsttätige statt pipettierende Mischen, durch die hohe Integrierbarkeit aller zum Mischen, zum etwaigen Amplifizieren und zur Testung benötigten Komponenten und durch die Möglichkeit des zusammenhängenden Entsorgens wird sowohl die Ärosol- als auch die Kreuzkontaminationsgefahr stark verringert.

Die Integration lässt sich bis hin zu einer sterilen Vorrichtung zum Einmalgebrauch steigern und dürfte dabei weniger Sondermüll produzieren als ein Aufbau mit einzeln steril verpackten diskreten Komponenten, sequentiell - und dadurch pro Einzelprobe - zugegebenen Reagenzien etc..

Durch einheitliche innere Gestaltung der Proben-Kammern können die zur Herstellung der Proben-Kammern nötigen Formen mit je ein- und demselben Positiv-Modell gefertigt werden.

Bei Durchführung eines großen Reihentests mittels einer Vorrichtungen-Kaskade [vk] ist z.B. bei PCR-Tests gemeinsame Amplifikation in einem großen, auch nicht zu testende Proben umfassenden Wasserbad denkbar.

Der Probenumfang m der äußersten Vorrichtungen bei Verwendung von Vorrichtungen-Kaskaden und Amplifikation kann je nach Positivwahrscheinlichkeit optimiert werden: je geringer die Wahrscheinlichkeit innerhalb einer äußersten Vorrichtung ist, dass mindestens eine Einzelprobe positiv ist, desto größer kann m gewählt werden.

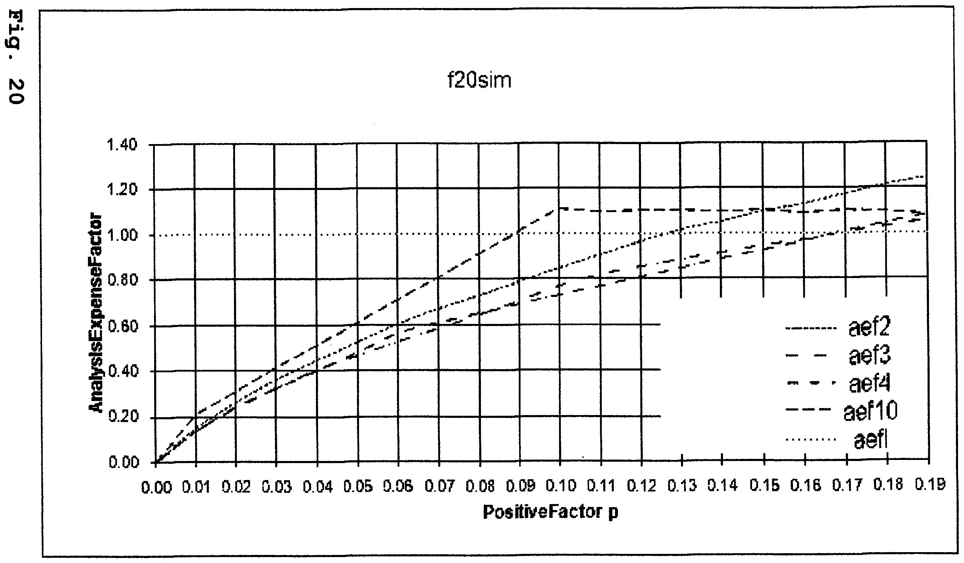

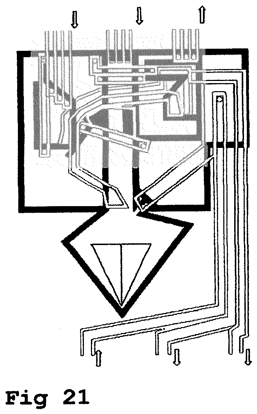

Fig. 20 zeigt den mit Computer-Simulationen ermittelten maximalen Testaufwand bei großen Reihentestungen, wobei der Simulation folgende Parameter zugrundegelegt wurden:
t Anzahl direkter Nachfolgerknoten pro Knoten: 2, 3, 4 und 10; (der Einfachheit halber nicht variabel über h, sondern fix pro Vorrichtung)
h Höhe des Baumes einer einzigen Vorrichtung: zwischen 2 und 18
H Höhe der Vorrichtung bzw. Vorrichtungen-Kaskade: zwischen 2 und 18
m Anzahl der in eine einzige Vorrichtung einbringbaren Einzelproben, also Anzahl Blattknoten, also t**h
N Gesamtzahl der auf die Vorrichtung oder die Vorrichtungen-Kaskade einzubringenden Einzelproben, jeweils soweit aufgerundet, dass auch die letzte benötigte Vorrichtung voll ist: Für die Simulation mindestens (und möglichst nur) 262144 bis maximal 390625 Einzelproben
p Positiv-Rate in Prozent von N: von 0 bis 0,19 - d.h. von 0% bis 19%

Auf der Y-Achse ist der Testaufwand im Verhältnis zum gesamten Einzelproben-Umfang aufgetragen (als Faktor). Zum Vergleich ist außerdem die bei linearer Testung anzusetzende 100%-Linie (waagrecht) eingezeichnet. Bedeutsam ist die Abhängigkeit der Testaufwands-Kurven insbesondere von den konstruktionsspezifischen Parametern t und h und vom Parameter "prognostizierte Positiv-Rate" pp, nach denen t und h optimiert werden können bzw. die optimale Vorrichtung ausgewählt werden kann. Konkret zeigt Fig. 20 bei Gleichverteilung positiver Proben (dem ungünstigsten Fall):
Bis 19% Positivrate ist die Wahl t = 3 oder 4 optimal. Ab ca. 17% Positivrate fällt allerdings ein Testaufwand von mehr als 100% des linearen Testaufwands an.
Eine ungünstige Auswahl der passenden Vorrichtung aufgrund ungenauer Prognose macht in der Nähe des Nullpunktes den logarithmischen Verlauf des Testaufwands in exponentiellem Maß zunichte.

## Patentansprüche

1. Vorrichtung
• zur Reihentestung flüssiger Proben mit von der Erfindung unabhängigen und bevorzugt amplifizierenden Testmethoden,
**dadurch gekennzeichnet, dass**
• Proben-Kammern [kp], die
• zu testende flüssige Proben aufnehmen,
• über Überlaufleitungen [lpu]
• in einer binären oder t-ären baumartigen Struktur zueinander angeordnet sind und
• Möglichkeiten des Druckausgleichs besitzen,
• vorzugsweise durch je eine Druckausgleichsleitung [lda,ldb,ld...] zur zugehörigen logisch untergeordneten Proben-Kammer [kn], also [kpa,kpb,kp...], hin,
• die logisch übergeordneten Proben-Kammern [kv] physisch tiefer liegen als die das zu mischende Volumen liefernden [kn],
• jede Proben-Kammer mindestens folgende Teile umfaßt:
• oben t Eingänge [lpa,lpb,lp...] von logisch untergeordneten, hydrostatisch höherliegenden Proben-Kammern her,
• nach unten einmündend in einen Proben-Kammerhals [kh],
• von [kh] aus nach unten einmündend in eine Probenrückhaltekammer [kr],
• des weiteren zwischen Proben-Kammerhals [kh] und Probenrückhaltekammer [kr] eine Öffnung [lpue]
• zu einer ausgehenden Überlaufleitung [lpu] und
• von [lpu] aus zu einer ausgehenden Leitung [lp] hin,
• wobei jede der t Überlaufleitungen [lpu,lp] einer Proben-Kammer [kp] aus einer der t logisch untergeordneten, also hydrostatisch höher liegenden Proben-Kammern [kn] in den Eingang [lpa,lpb,lp...] der ihr logisch übergeordneten, hydrostatisch tieferliegenden Proben-Kammer führt,
• zu testende Proben aufnehmende Proben-Kammern in einer binären oder t-ären baumartigen Struktur angeordnet sind, wobei
• jede Proben-Kammer [kp] eine Probe aufnimmt, die sein kann
• eine Einzelprobe, z.B. aus einem Probenröhrchen, oder
• eine testneutrale Dummyprobe [p0] oder
• eine Mischprobe aus t logisch direkt untergeordneten Knoten oder
• eine Mischprobe aus t logisch direkt untergeordneten Wurzelknoten kaskadierender Vorrichtungen,
• jede Probe bzw. Proben-Kammer [kp] logisch einen Baumknoten darstellt und
• das t in "t-är", also die Anzahl logisch direkt untergeordneter Knoten pro internem Knoten, fix ist oder aber über die Baumhöhe variabel,
• jede Einzelprobe [pe] logisch einen Blattknoten [kb] darstellt und einer Einzelproben-Kammer, z.B. einem Probenröhrchen, entspricht,
• jede Mischprobe [pm] logisch einen internen Knoten [ki] darstellt (d.h. keinen Blattknoten) und einer Proben-Kammer [kp] entspricht,
• das Volumen jeder Proben-Kammer [kp] sich logisch aufteilt in ein für einen etwaigen Test in einer Probenrückhaltekammer [kr] benötigtes Probenvolumen [vr] und ein Volumen [vh] im Proben-Kammerhals [kh] innerhalb [kn], das mindestens den t-ten Teil des Volumens [vr] der logisch übergeordneten Probenrückhaltekammer [kr] innerhalb [kv] ausmacht.

2. Verfahren
• zur Reihentestung flüssiger Proben mit von der Erfindung unabhängigen und bevorzugt amplifizierenden Testmethoden in einer Vorrichtung nach Anspruch 1.,
**dadurch gekennzeichnet, dass**
• eine Probe entweder eine Einzelprobe ist oder eine Mischprobe aus t Einzel- oder Mischproben oder eine testnegative Dummy-Flüssigkeit ist,
• zwecks Mischens die zu testenden Einzelproben [pe] in hydrostatisch am höchsten liegende Proben-Kammern der Blattknoten [kb] des Baumes eingebracht werden,
• die Proben aus jeweils t logisch untergeordneten Proben-Kammern [kpa,kpb,kp...]
• in eine ihnen logisch übergeordnete, hydrostatisch tieferliegende Proben-Kammer [kv]
• gemischt eingeleitet werden, sodass das Flüssigkeitsniveau [hpu] der Mischprobe zu Überlauf an der ausgehenden Leitung [lpu] führt,
• nach diesem Überlauf aus jeder dieser t Proben-Kammern [kpa,kpb,kp...] ein zum Mischen weiterzugebendes Probenvolumen [vh] ohne weiteres Zutun abfließt und
• in den nächsten, logisch übergeordneten Knoten [kv] weitergegeben wird,
• das Verhältnis eines zu testenden Volumens [vr] unterhalb der Überlauföffnung [lpue] zu dem überlaufenden Volumen [vh] oberhalb derselben [lpue] so bemessen ist, dass immer nur ein t-ter Teil des Probenvolumens [vp] als weiterzugebendes Probenvolumen [vh] abfließt, ein pro Test benötigtes Volumen [vr] dagegen in der Probenrückhaltekammer [kr] verbleibt,
• anschließend jeder interne Knoten [ki] des Testbaumes ein Probengemisch [pm] aus t logisch untergeordneten Proben [kn] enthält,
• das Testergebnis eines internen Knotens [ki] dadurch immer den Sammelstatus bzw. die ODER-Verknüpfung der Testergebnisse aller seiner untergeordneten Knoten, also des ganzen ihm untergeordneten Teilbaumes [bt] bis zu den Blattknoten [kb] darstellt,
• das Testen der Proben dagegen bei der Wurzel [wv] begonnen wird,
• in jedem Knoten [kp] mit positivem Testergebnis [+] jeweils alle seine direkt untergeordneten Knoten [kpa,kpb,kp...] getestet werden und der dabei zurückgelegte Test-Pfad bzw. die dabei zurückgelegten Test-Pfade in mindestens einem Zweig zu mindestens einem Blattknoten [kba,kbb,kb...], also zu mindestens einer positiven Einzelprobe, führt,
• in jedem Knoten mit negativem Testergebnis [-] dagegen jeweils auch alle seine untergeordneten Teilbäume [bt] einschließlich deren Teilbäume bis hin zu deren Blattknoten [kb] implizit negativ sind und nicht getestet werden brauchen.

3. Verfahren
• nach Anspruch 2.,
**dadurch gekennzeichnet, dass**
• die Durchmischung der Probe in der Proben-Kammer [kp], insbesondere auch in der kurzen Zeitspanne bis zum Erreichen des Überlaufniveaus [lpuk], durch einen oder mehrere magnetisch anziehbare Gegenstände [km] unterstützt wird, die
• sich in der Proben-Kammer [kp], also ggf. im Probenkammerhals [kh] und / oder in der Proberückhaltekammer [kr], befinden,
• durch ein externes, wanderndes Magnetfeld in der Probe [pm] bewegt werden.

4. Verfahren
• nach Anspruch 2.,
**dadurch gekennzeichnet, dass**
• das System in Mikrofluidik-Technik realisiert ist.

5. Verfahren
• nach Anspruch 2.,
**dadurch gekennzeichnet, dass**
• die die Proben-Kammern [kpa,kpb,kp...] verbindenden Überlaufleitungen [lpu] Saugheber sind und derart angeordnet sind, dass
• in jede logisch untergeordnete, also hydrostatisch höher liegende Proben-Kammer [kn] je ein Saugheber [lpu] eintaucht, dessen ausgehende Öffnung [lp] hydrostatisch tiefer liegt oder in eine tieferliegende Lage gebracht wird als dessen Ansaug-Öffnung [lpue] und
• in einen der t Eingänge [analog zu kpa,kpb,kp...] der logisch übergeordneten, hydrostatisch tieferliegenden Proben-Kammer [kv] führt,
• das Verfahren so funktioniert, dass
• durch das Einleiten von je 1 t-tel aus jeweils t logisch untergeordneten Proben-Kammern [kn] das steigende Flüssigkeitsniveau im Saugheber [lpu] zu Überlauf führt,
• nach diesem Saugheber-Überlauf aus jeder dieser t Proben-Kammern [kpa,kpb,kp...] das zum Mischen weiterzugebende Volumen [vh] durch die Saughebewirkung ohne weiteres Zutun abgesaugt wird,
• dabei auf ein t-tel des Probenkammervolumens [vp] dosiert wird und in den logisch übergeordneten Knoten [kv] weitergegeben wird.

6. Verfahren
• nach Anspruch 5.,
**dadurch gekennzeichnet, dass**
• aus dem Proben-Kammerhals [kh] ein Überflussschacht [su], der
• in einer Überflusseingangsöffnung [sue] auf der dem Proben-Überlauf-Saugheber [lpu] zugewandten Seite beginnend,
• den Proben-Kammerhals [kh] kreuzend,
• dabei nicht enger als t mal Querschnitt der Proben-Eingangsleitungen [lpa,lpb,lp...] werdend
• einmündet in einen Überflussbehälter [ku], der
• eine Druckausgleichsmöglichkeit besitzt,
• die Überfluss-Eingangsöffnung [sue] des Überflussschachts [su] in einer solchen Höhe [hsu] angebracht ist, dass beim mischenden Einbringen der t logisch untergeordneten Proben zwischen der Proben-Überlauf-Eingangsöffnung [lpue] und diesem Toleranz-Überfluss [sue] ein t-ter Teil der entstehenden Mischprobe stehenbleibt,
• ein etwaiger überschüssiger Teil dagegen sofort und endgültig abfließt in die Überflusskammer [ku].

7. Verfahren
• nach Anspruch 5.,
**dadurch gekennzeichnet, dass**
• die Vorrichtung dergestalt ist, dass
• die Proben-Kammer [kp] jedes internen Knotens [ki] gegenüber der des logisch untergeordneten Knotens [kn] um 180 Grad um die vertikale Mittenachse [ms] gedreht ist,
• die Vorrichtung kippbar ist in zwei entgegengesetzte Schräglagen [pes] und [pus], deren eine [pus] in die Proben-Überlauffluss-Richtung zeigt,
• jede Proben-Überlaufkuppe [lpuk] auf der der Probeneinfüll-Kipprichtung [pes] jeweils abgewandten Seite [pus] angeordnet ist,
• für das Verfahren gilt, dass
• die Vorrichtung während des Einbringens der Proben einer Knotenebene gekippt ist in die der Proben-Überlaufkuppe [lpuk] abgewandte Einfüll-Schräglage [pes], und zwar so dass
• der in Einfüllschräglage [pes] am höchsten liegende Punkt der Proben-Überlaufkuppe [lpuk] dadurch höher liegt als der maximale Mischprobenpegel [hpe] in gleicher Schräglage,
• dadurch eine den nächsten Überlauf sperrende Höhendifferenz [hdpe] zwischen dem aktuell entstehenden Mischprobenpegel [hpe] und der Höhe der Überlaufkuppe [lpuk] erzielt wird und dadurch
• die Probe nicht über diese Überlaufkuppe [lpuk] abfließen kann,
• die Schräglage mehrmals um die Senkrechte alterniert zwischen [pes] und [pus] zum Füllen der jeweils nächsten Knotenebene,
• aber erst, sobald in der aktuellen Ebene der Zulauf von allen Proben beendet ist,
• jeweils in Überlaufschräglage [pus] das Probenniveau [hpe] um eine Höhendifferenz [hdpu] zwischen [hpe] und [lpuk] höher zu liegen kommt als [lpuk],
• dadurch der Probenüberlauf in die nächste Ebene eingeleitet wird,
• durch das Alternieren zwischen [pes] und [pus] die Mischvorgänge Ebene für Ebene getaktet werden, d.h. die Mischvorgänge in allen Proben-Kammern der aktuellen Knotenebene gleichzeitig gestartet werden.

8. Verfahren
• nach Anspruch 7.,
**dadurch gekennzeichnet, dass**
• konstruktiv die Probenrückhaltekammer [kr] an ihrer der Proben-Überlaufkuppe [lpuk] abgewandten Seitenwand eine solche Aufweitung [krp] hat, dass das in Proben-Überlauf-Schräglage [pus] durch diese Schräglage abfließende Volumen [vh] um ein zusätzliches Volumen [vkrp] vergrößert wird, sodass
• nach Zurückkippen zumindest in die Senkrechte [ms] das verbleibende Mischprobenvolumen etwas kleiner ist als das Probenrückhalte-Kammervolumen [vr] und sein Pegel nicht mehr die Höhe des Eingangs [lpue] der Proben-Überlaufleitung [lpu] erreicht und
• dadurch ein für ein abdeckendes Öl [o] hinreichender Abstand [hdo] verbleibt,
• wobei dieses Öl [o] ein geringeres spezifisches Gewicht hat als die Proben,
• die Vorrichtung zusätzlich zwei Öl-Kammern [ko1,ko2] besitzt, von denen jede von der Proben-Kammer-Mittelsenkrechten [ms] seitlich so weit abgesetzt ist, dass sie durch Öl-Überlauf-Schräglage [wuo] auf ein höheres hydrostatisches Niveau [ho1u,ho2u] gehoben wird,
• eine Schrägdecke [kod] aufweist, die auch in Öleinleitschräglage [weo] noch zur Mittenachse [ms] der Probenkammer hin abfällt und
• von ihrem in Öleinleit-Schräglage [weo] höchstgelegenem Eck aus einen Druckausgleich [ldo] besitzt und
• an ihrem in Öl-Überlauf-Schräglage [wuo] tiefsten Punkt einen Öl-Saugheber ausgehen läßt,
• die erste Öl-Kammer [ko1]:
• über t Öl-Eingangsleitungen [loa,lob,lo...] mit je einer Öl-Ausgangsleitung [lo] aus einer von t hydrostatisch höher liegenden Probenkammern [kn] verbunden ist,
• auf der der Proben-Überlaufkuppe [lpuk] entgegengesetzten Seite liegt,
• sich beim Einleiten des Öls in einer Schräglage [weo1] befindet, die richtungsmäßig der Probeneinleitschräglage [pes] entspricht, und
• ausgangsseitig über einen ersten Ölsaugheber [so1] mit der zweiten Öl-Kammer [ko2] verbunden ist,
• die zweite Öl-Kammer [ko2]:
• sich beim Einleiten des Öls in einer Schräglage [weo2] befindet, die der Öleinleit-Schräglage [weo1] der ersten Öl-Kammer [ko1] entgegengesetzt ist,
• groß genug ist, die Ölvolumina sowohl aus der ersten Öl-Kammer [ko1] als auch aus dem beide Öl-Kammern verbindenden ersten Ölsaugheber [so1] aufzunehmen und
• ausgangsseitig durch einen zweiten Ölsaugheber [so2] mit einem tieferliegenden Punkt [so2a] im Proben-Kammerhals [kh] verbunden ist,
• jeder der beiden Öl-Saugheber [so1,so2]:
• die Mittelsenkrechte [ms] der Proben-Kammer überquert,
• in Öleinlauf-Schräglage [weo] an mindestens einem Punkt [soke] höher liegt als das höchste auf ihn Druck ausübende Flüssigkeitsniveau,
• in Öl-Überlauf-Schräglage [wuo] auf der gesamten Länge tiefer liegt als das höchste Ölniveau [hou] der betr. leerzusaugenden Öl-Kammer,
• am tieferliegenden Ende der Schrägdecke [kod] steil nach oben durch diese hinausführt,
• der erste Ölsaugheber [so1]:
• auch in der Proben-Überlauf-Schräglage des zweiten Öl-Saughebers an mindestens einem Punkt [so1ke] höher liegt als das höchste Niveau [ho2u] der zweiten Öl-Kammer [ko2] und dadurch einen Rückfluss in die erste Öl-Kammer [ko1] verhindert, und
• möglichst tief in die zweite Öl-Kammer [ko2] hineinragt und dadurch zum Schluss des durch ihn führenden Absaugens auch selbst nahezu vollständig entleert wird, was ein Zurücksaugen durch ihn während der nächsten entgegengesetzten Schräglage verhindert,
• verfahrensmäßig
• die erste Öl-Kammer [ko1]:
• von den t hydrostatisch höher liegenden Probenkammern [kn] über deren jeweilige Öl-Ausgangsleitung [lo] und weiter über die Öl-Eingangsleitungen [loa,lob,lo...] ein für das Abdecken der Mischprobe vorgesehenes Öl [o] aufnimmt und
• beim Einleiten des Öls in erste Öl-Kammer [ko1] die Vorrichtung in einer der Proben-Überlauf-Schräglage [pus] entgegengesetzten Schräglage [weo] ist,
• jede der beiden Öl-Kammern [ko1,ko2] nacheinander durch Kippen in eine der jeweiligen Öl-Einfüll-Schräglage [weo] entgegengesetzte Öl-Überlauf-Schräglage [wuo]
• auf ein höheres hydrostatischen Niveau [hou] gehoben wird und
• ihr Öl durch den Druck des im höchstgelegenen Öl-Kammereck [hoe] der Schrägdecke [kod] befindlichen Ölvolumens [voe] durch den tiefer als [hoe] austretenden und dadurch teilweise gefüllten Öl-Saugheber [so1,so2] überläuft und die Öl-Kammer sich durch Saughebewirkung entleert,
• jeder der beiden Öl-Saugheber [so1,so2]:
• in seiner Überlauf-Schräglage [wuo] am höchstgelegenen Punkt seiner Überlaufkuppe [soku] wegen seines am tieferliegenden Ende der Schrägdecke [kod] liegenden, steil nach oben führenden Durchgangs sich schon in der Öleinleit-Schräglage [weo], in der die durch ihn abzusaugende Öl-Kammer noch abgesenkt ist, soweit mit Öl füllt, dass
• das verhältnismäßig kleine, beim Kippen in die Öl-Überlauf-Schräglage [wuo] hinzukommende Ölvolumen [voe] im oberhalb der Öl-Überlaufkuppe gelegenen Eck [hoe] der höher liegenden Öl-Kammer ausreicht, den Öl-Überlauf einzuleiten, und
• die Öl-Kammer sich über den Öl-Saugheber entleert,
• die zweite Öl-Kammer [ko2]:
• durch Kippen der Vorrichtung in die auch für den Proben-Überlauf [pus] benötigte Schräglage [weo1] das Öl aus der ersten Öl-Kammer [ko1] übernimmt und
• während der Proben-Überlaufschräglage [pus] zwischenspeichert,
• erst beim Zürückkippen mindestens in die Proben-Einleitposition [pes] das Öl in den leergesaugten [kh] Proben-Kammerhals abfließen läßt, wo
• das Öl [o] die Oberfläche des verbleibenden, zur Testung bestimmten Probengemischs [pm] abdeckt und
• den Eingang [lpue] der Proben-Überlaufleitung [lpu] verschließt und dadurch
• Rückwärtskontaminationen von der logisch übergeordneten, möglicherweise positiven Mischprobe [pm] in [kv] her bzw. später von einer der logisch noch weiter übergeordneten Mischproben her verhindert,
• stofflich:
• das spezifische Gewicht des Öls [o] geringer ist als das der Probe [pm],
• anstelle von Öl [o] auch einer der folgenden Stoffe bzw. Stoffgemische verwendet werden kann:
• ein bei Energiezufuhr verharzendes und dadurch sicherer abschließendes Öl-Harz-Gemisch,
• ein bei Energiezufuhr aushärtendes Kunstharz,
• eine bei Energiezufuhr Wachs ausfällende Emulsion,
• eine Emulsion aus mindestens drei Komponenten, in die sie bei Energiezufuhr zerfällt, nämlich
• einem erhärtenden Stoff [mu], der ein spezifisches Gewicht hat, das relativ hoch, aber geringer ist als das der Probe, und der nach Probenüberlauf die Mischprobe in der Probenrückhaltekammer [kr] verschließt,
• einem erhärtenden Stoff [mo], der ein möglichst geringes spezifisches Gewicht hat und nach Probenüberlauf zwecks sicheren mechanischen Schnitts [sk] den entleerten Proben-Kammerhals [kh] verschließt und
• die Eingangsöffnung [lpue] der Proben-Überlaufleitung [lpu], also die Verbindung zur logisch übergeordneten, möglicherweise positiven Mischprobe [pm] in [kv], verschließt,
• einem nicht erhärtenden Stoff [mm], der ein spezifisches Gewicht hat, das zwischen dem der beiden erhärtenden Stoffe liegt, und durch den hindurch der Schnitt [sk] gelegt werden kann zum Abpflücken der die zu testende Mischprobe [pm] enthaltenden Probenrückhaltekammer [kr],
• eine sonstige, durch Energiezufuhr zumindest eine abdeckende Haut bildende Flüssigkeit oder Emulsion oder
• eine sonstige abdeckende Flüssigkeit oder Emulsion,
• die Energiezufuhr, wo nötig, in Abhängigkeit von der Probe und der Testmethode insbesondere sein kann:
• Hitzezufuhr,
• Hitzezufuhr und anschließendes Abkühlen,
• ultraviolettes Licht, z.B. für Kustharze.

9. Verfahren
• nach Anspruch 8.,
**dadurch gekennzeichnet, dass**
• zur Minimierung der Kreuzkontaminationsgefahr das Mischen der t Proben erst nach Verschließen sämtlicher Leitungen und Verbindungen zwischen den Teilproben erfolgt. Dabei gilt:
• Statt einer t Teilproben sofort mischenden Probenkammer nehmen t Probenkammern die t Proben über die Eingangsleitungen lp(a|b|...) auf,
• zusätzlich liegt eine die t Proben aufnehmende Mischkammer [khm] hinter den t Probenüberlaufskuppen [lpuk(a|b|...)],
• jede der t Probenüberlaufsleitungen [lpu(a|b|...)] mündet in diese Mischkammer [khm],
• jede der t Probenkammernhälse [kh(a|b|...)] gibt eine Probe an die Mischkammer [khm] ab,
• die Mischprobenausgangsleitung [lp(a+b+...)] bietet die Mischprobe an wie schon nach Anspruch 8. (dort einfach als [lp] bezeichnet),
• statt aller t Öl-Eingangsleitungen [loa,lob,lo...] nach Anspruch 8. mündet nur eine der t Öl-Eingangsleitungen [lo(a|b|...)] in die erste Ölkammer [ko1],
• ein Druckausgleichs-Volumen kommt jeweils durch eine der Druckausgleichsleitungen [ldo(a|b|...)] aus der logisch übergeordneten Probenkammer [kv] zurück und
• wird auf t möglichst flach liegende, vorzugsweise schlaufen- oder spiralförmige Druckausgleichsleitungen [ldo(a|b|...)] geführt,
• jede Druckausgleichsleitung [ldo(a|b|...)] ist nahe ihren Eingangs mit einem hinreichend großen Öltropfen [od(a|b|...)] abgedichtet,
• jede Druckausgleichsleitung [ldo(a|b|...)] liegt auf einem niedrigeren hydrostatischen Niveau als die Probenüberlaufkuppe [lpuk(a|b|...)] in Überlaufschräglage [pus],
• der Überdruck durch Probenüberlauf drückt die t abdichtenden Öltropfen [od(a|b|...)] so weit in die t Leitungen [ldo(a|b|...)] in Richtung [ld(a|b|...)], bis der Druck ausgeglichen ist,
• das Volumen jedes der Öltropfen [od(a|b|...)] ist groß genug, dass Ölverluste auf dem Weg durch die Druckausgleichsleitung [ldo(a|b|...)] nicht zu einem Abreißen der Abdichtwirkung führen.
• Das kreuzkontaminationsbegünstigende Mischen der t Proben aus den t Kammerhälsen [kh(a|b|...)] in [khm] erfolgt also erst nach Probenüberlauf aus den t Probenkammerhälsen [kh(a|b|...)] über deren Probenüberlaufskuppe [lpuk(a|b|...)] und erst wenn der Probenüberlaufs-Leitungseingang [lpue(a|b|...)] abgedeckt ist.

10. Verfahren
• nach Anspruch 8.,
**dadurch gekennzeichnet, dass**
• das in Anspruch 8. definierte System aus Saughebern und puffernden Kammern doppelt eingebaut wird, nämlich
• zum einen für Öl wie in Anspruch 8. beschrieben,
• aber mit einer zusätzlichen dritten Öl-Kammer [ko3]
zum anderen für Reagenzien, die analog dem Öl aus Anspruch 8. an die hydrostatisch tiefer liegenden Probenkammern getaktet weitergegeben werden,
• allerdings i.d.R. um eine Schräglage früher als das Öl,
• die in die Leitungen bei den Einzelproben in den Blattknoten eingefüllt werden,
• der Öl-Saugheber [so2] aus der zweiten Öl-Kammer [ko2] nicht direkt in das untere Ende des Probenkammerhalses [kh] mündet, sondern über einen Ausgang [so2x] in die dritte Öl-Kammer [ko3], die das Öl um einer weiteren Schräglage zwischenpuffert, während
• statt des Öls nun die Reagenzien in dieser Schräglage aus der zweiten Reagenzien-Kammer in die in der Probenrückhaltekammer [kr] verbliebene Mischprobe fließen,
• erst in der nächsten Schräglage das Öl aus [ko3] über einen weiteren Öl-Saugheber [so3] beim Saugheberausgang [so3a] auf die verbliebene, nun mit Reagenzien angereicherte Mischprobe fließt und danach
• die Oberfläche des verbleibenden, zur Testung bestimmten Probengemischs [pm] abdeckt und
• den Eingang [lpue] der Proben-Überlaufleitung [lpu] verschließt.

11. Verfahren
• nach Anspruch 2. oder Anspruch 8.,
**dadurch gekennzeichnet, dass**
• die Vorrichtung statt flüssiger gasförmige Proben aufnimmt und
• im Falle des Anspruchs 8. statt verschließendem oder abdeckendem Öl ein verschließendes bzw. abdeckendes Gas verwendet wird,
• bei gasförmigen Proben, deren spezifisches Gewicht größer ist als das des Mediums, das die Vorrichtung umgibt,
• das im Falle des Anspruchs 8. verschließende bzw. abdeckende Gas ein kleineres spezifisches Gewicht hat als die gasartige Probe,
• bei gasförmigen Proben, deren spezifisches Gewicht kleiner ist als das des Mediums, das die Vorrichtung umgibt,
• die Vorrichtung um 180 Grad um die horizontale Achse gekippt ist, wobei
• in allen Beschreibungen "oben" und "unten" vertauscht werden,
• das im Falle des Anspruchs 8. verschließende bzw. abdeckende Gas ein größeres spezifisches Gewicht hat als die gasartige Probe.

12. Vorrichtung
• nach Anspruch 1.,
**dadurch gekennzeichnet, dass**
• die in einer Proben-Kammer befindliche Probe zwecks Präparation und / oder Amplifikation und / oder Testung
• einzeln abgesaugt wird, wobei
• der nötige Druckausgleich in einem geschlossenen System erfolgt,
• zum Einleiten bzw. zum Absaugen eine spezielle Doppel-Spritze [ks] dient, die versehen ist mit
• einem Spritzenkolben [ksk],
• einem wie herkömmlich vor dem Spritzenkolben [ksk] liegenden Hohlraum [vksu],
• einem weiteren Hohlraum [vkso], der
• hinter dem Spritzenkolben [ksk] liegt und
• auch am hinteren Ende [ksh] der Spritze geschlossenen ist, und
• einer Gabel [ksg],
• die zwei Kanülen [ksnu,ksno] trägt, die
• beide im gleichen Drehsinn, aber in unterschiedlichen Höhen in den von der Gabel [ksg] umfassten Zwischenraum ragen, wobei
• [ksnu] durch eine Leitung [lksu] mit [vksu] verbunden ist,
• [ksno] durch eine Leitung [lkso] mit [vkso] verbunden ist,
• zwischen sich eine zur Aufnahme einer Probenrückhaltekammer [kr] und eines Probenkammerhalses [kh] ausreichende lichte Weite [dksg] freilassen,
• entlang der Mittenhalbierenden [ksgm] der Gabel [ksg] über eine Probenrückhaltekammer [kr] und einen Probenkammerhals [kh] geschoben und mit einer Drehbewegung [kss] um den Spritzengabel-Drehpunkt [ksd] in zwei unterschiedlichen Höhen eingestochen werden und
• deren weiter unten eingestochene Kanüle [ksnu] dadurch in [kr] hineinragt,
• um die Mischprobe aus [kr] abzusaugen oder
• zwecks Einbringens von Reagenzien,
• deren weiter oben eingestochene Kanüle [ksno] dagegen in [kh] hineinragt und
• während des Einbringens oder Absaugens für Druckausgleich sorgt.

## Claims

1. Device
for the series testing of liquid samples, **characterised in that**
• sample chambers [kp] take up liquid samples to be tested
• the sample chambers [kp] are arranged in a binary or t-ary tree order via overflow pipes [lpu] and
• the sample chambers [kp] have a possibility of pressure equalization, preferably by a respective pressure equalization line [lda, ldb, ld ...] to the associated logically subordinate sample chamber [kn], ie [kpa, kpb, kp ...],
• the logically superior sample chambers [kv] are physically lower than those supplying the volume to be mixed [kn],
• each sample chamber contains at least the following parts: top t Inputs [lpa, lpb, lp ...] from logically subordinate, hydrostatically higher sample chambers, opening down into a sample chamber neck [kh], and from [kh] opening down into a sample retention chamber [kr],
• further each sample chamber between sample chamber neck [kh] and sample retention chamber [kr] contains an opening [lpue] to an outgoing overflow line [lpu] and from [lpu] to an outgoing line [lp], where each of the t overflow lines [lpu, lp] of a sample chamber [kp] leads from one of t logically subordinate, so hydrostatically higher sample chambers [kn] in the input [lpa, lpb, lp ...] of her logically higher-level, hydrostatically lower sample chamber,
• samples receiving sample chambers are arranged in a binary or t-ary tree order, wherein each sample chamber [kp] picks up a sample that may be a single sample, e.g. from a sample tube, or a test-neutral dummy sample [p0] or a mixed sample of t logically directly subordinate nodes or a mixed sample of t logically directly subordinate root nodes of cascading devices,
• each sample or chamber [kp] logically represents a tree node and
• the t in "t-är", ie the number of logically directly subordinate nodes per inner node is fix or else variable over the tree height,
• every single sample [pe] logically represents a leaf node [kb] and corresponds to a single-sample chamber, e.g. a sample tube,
• each mixed sample [pm] logically represents an inner node [ki] (ie no leaf node) and corresponds to a sample chamber [kp],
• the volume of each sample chamber [kp] logically divides into a sample volume [vr] needed for any assay in a sample retention chamber [kr] and a volume [vh] in the sample chamber neck [kh] within [kn] that is at least the t-th part of the volume [vr] of the logically superior sample retention chamber [kr] within [kv].

2. Procedure
for the series testing of liquid samples preferably using amplifying and invention independent test methods according to claim 1, **characterised in that**
• a sample either is a single sample or a mixed sample of t single or mixed samples or is a test-negative dummy fluid,
• for mixing the individual samples [pe] to be tested are placed in hydrostatically highest sample chambers of the leaf nodes [kb] of the tree,
• the samples from in each case t logically subordinate sample chambers [kpa, kpb, kp ...] are mixed into a logically superior, hydrostatically lower sample chamber [kv]
• so that the liquid level [hpu] of the mixed sample leads to overflow at the outgoing line [lpu],
• after this overflow from each of these t sample chambers [kpa, kpb, kp ...] a sample volume to be passed for mixing [vh] flows without further action and is passed on to the next, logically superior node [kv],
• the ratio of a volume to be tested [vr] below the overflow opening [lpue] to the overflowing volume [vh] above the same [lpue] is such that
• only one t-th part of the sample volume [vp] drains off as sample volume [vh] to be transferred, on the other hand, a volume [vr] required per test remains in the sample retention chamber [kr],
• then each inner node [ki] of the test tree contains a sample mixture [pm] of t logically subordinate samples [kn],
• the test result of an inner node [ki] thereby always represents the collection status or the OR combination of the test results of all its subordinate nodes, i.e. the collection status of the whole subordinate tree [bt] subordinate to the leaf nodes [kb]
• the testing of the samples is started at root [wv],
• in each node [kp] with positive test result [+] in each case all of its directly subordinate nodes [kpa, kpb, kp ...] are tested and the thereby covered test path or the thereby covered test paths in at least one branch leads to at least one leaf node [kba, kbb, kb ...], i.e. to at least one positive single sample,
• in each node with a negative test result [-] on the other hand also all its subtrees [bt] including their subtrees up to their leaf nodes [kb] are implicitly negative and do not need to be tested.

3. Procedure
according to claim 2, **characterised in that**
• the mixing of the sample in the sample chamber [kp], in particular also in the short time to reach the overflow level [lpuk], is supported by one or more magnetically attractable objects [km] that reside in the sample chamber [kp], i.e. in the sample chamber neck [kh] and / or in the sample retention chamber [kr], and that are moved in the sample [pm] through an external, wandering magnetic field

4. Method
according to claim 2, **characterised in that**
• the system is realized in microfluidic technology.

5. Method
according to claim 2, **characterised in that**
• the overflow pipes [lpu] connecting the sample chambers [kpa, kpb, kp ...] are suction lifters and
• are arranged such that into each logically subordinate, i.e. hydrostatically higher, sample chamber [kn] a suction lifter [lpu] is dipped, whose outgoing opening [lp] is hydrostatically lower or brought to a lower position than its intake opening [lpue] and leads into one of the t inputs [analogous to kpa, kpb, kp ...] of the logically superior, hydrostatically lower sample chamber [kv],
• the procedure works so that by introducing 1 t-tel each of t logically subordinate sample chambers [kn] the rising liquid level in the suction lifter [lpu] leads to overflow,
• after this suction lifter overflow from each of these t sample chambers [kpa, kpb, kp ...] the volume to be passed for mixing [vh] is drawn off by the suction lifting effect without any further action, is thereby metered to a t-th of the sample chamber volume [vp] and is passed to the logically superior node [kv].

6. Method
according to claim 5, **characterised in that**
• from the sample chamber neck [kh] an abundance well [su], beginning in an overflow inlet opening [sue] on the side facing the sample overflow suction lifter [lpu] and crossing the sample chamber neck [kh], becoming not narrower than t times cross-section of the sample inlet sides [lpa, lpb, lp ...]
enters an abundance tank [ku], which has a pressure equalization option,
• the excess inflow opening [sue] of the overflow well [su] is attached at such a height [hsu] that when mixing the t logically subordinate samples, between the sample overflow inlet opening [lpue] and this tolerance overflow inlet opening [sue], a t-th part of the resulting mixed sample stops,
• any surplus part, however, flows immediately and finally into the overflow chamber [ku].

7. Method
according to claim 5, **characterised in that**
• the device is such that he sample chamber [kp] of each inner node [ki] is rotated 180 degrees relative to that of the logically subordinate node [kn] about the vertical center axis [ms],
• the device is tiltable in two oppositely inclined positions [pes] and [pus], one of which points [pus] in the sample overflow direction,
• each sample overflow tip [lpuk] is located on the opposite side of the sample filling direction [pes],
• for the procedure, the device is tilted during the introduction of the samples of a node level in the sample overflow tip [lpuk] facing away from filling inclination [pes],
• so that the highest point of the sample spill point [lpuk] which is at the highest filling level [pes] is higher than the maximum mixed specimen level [hpe] at the same inclination,
• thereby achieving a height difference [hdpe] blocking the next overflow between the currently arising mixed sample level [hpe] and the height of the overflow tip [lpuk] and
• thereby the sample can not drain off this overflow [lpuk],
• the skew is alternated several times around the vertical between [pes] and [pus] to fill the next knot plane, but only as soon as in the current level the feed of all samples is finished,
• each in overflow slant [pus] the sample level [hpe] becomes by a height difference [hdpu] between [hpe] and [lpuk] higher than [lpuk],
• thereby introducing sample overflow to the next level,
• by alternating between [pes] and [pus] the mixing operations are clocked level by level, i.e. the mixing processes in all sample chambers of the current node level are started at the same time.

8. Procedure
according to claim 7, **characterised in that**
• constructive the sample retention chamber [kr] has such an expansion [krp] on its side wall facing away from the sample overflow tip [lpuk] that the volume [vh] draining through this inclination in sample overflow inclination [pus] is increased by an additional volume [vkrp], so that after tilting back at least into the vertical [ms] the remaining mixed sample volume is slightly smaller than the sample retention chamber volume [vr] and its level is no longer equal to the height [lpu] of the sample overflow line [lpu] and this leaves a sufficient distance [hdo] for a covering oil [o],
• this oil [o] has a lower specific gravity than the samples,
• the device additionally has two oil chambers [ko1, ko2], each of which from the sample-chamber mid-perpendicular [ms] is laterally offset so that it is lifted to a higher hydrostatic level [ho1u, ho2u] by oil overflow inclination [wuo],
• has a pitched ceiling [kod], that even in oil inlet slant [weo] still falls towards the center axis [ms] of the sample chamber, and
• has a pressure equalization [ldo] from its highest point at oil inlet angle [weo] and at its lowest point in the oil overflow angle [wuo], let an oil suction lifter out,
• the first oil chamber [ko1] is connected via t oil input lines [loa, lob, lo ...],
• each with an oil outlet line [lo] from one of t hydrostatically higher sample chambers [kn], on the opposite side of the sample overflow lump,
• when the oil is introduced, it is in an inclined position [weo1], which corresponds in directional direction to the sample introduction angle [pes], and
• on the output side via a first oil suction lifter [so1] is connected to the second oil chamber [ko2],
• the second oil chamber [ko2] when the oil is introduced, it is in an inclined position [weo2], which is opposite to the oil inlet angle [weo1] of the first oil chamber [ko1],
• it is large enough to take up the oil volumes from both the first oil chamber [ko1] and from the first oil suction lifter [so1] connecting both oil chambers and
• on the output side it is connected by a second oil suction lifter [so2] to a deeper point [so2a] in the sample chamber neck [kh],
• each of the two oil suction lifters [so1, so2] crosses the mid-perpendicular [ms] of the sample chamber,
• in oil inlet angle [weo] at least one point [soke] is higher than the highest level of liquid exerting pressure on it,
• in oil overflow inclination [wuo] the second oil chamber [ko2] in the entire length of the oil chamber is lower than the highest oil level [hou],
• at the lower end of the inclined ceiling [kod] leading steeply upwards, the first oil suction lifter [so1] also in the sample overflow inclined position of the second oil sump at at least one point [so1ke] is higher than the highest level [ho2u] of the second oil chamber [ko2] and thereby a backflow into the first oil chamber [ko1] prevented,
• and penetrates as deeply as possible into the second oil chamber [ko2] and thus at the end of the suction leading through it is itself almost completely emptied, which prevents it from sucking back during the next opposite inclined position,
• procedurally
the first oil chamber [ko1]
• from the t hydrostatically higher sample chambers [kn] via their respective oil outlet line [lo] and further via the oil input lines [loa, lob, lo ...] receives an oil [o] intended for covering the mixed sample and
• when the oil is introduced into the first oil chamber [ko1] the device is in an inclined position [weo] opposite to the sample overflow angle [pus],
• each of the two oil chambers [ko1, ko2] successively by tilting into one of the respective oil overflow inclined position [wuo] opposite to oil filling angle [weo] is raised to a higher hydrostatic level [hou] and
• their oil by the pressure of the oil volume [voe] in the highest oil chamber corner [hoe] of the slant [kod] overflows through the oil sump [so1, so2] exiting deeper than [hoe] and thereby partially filled, and
• the oil chamber is drained by suction lifting,
• each of the two oil suction lifters [so1, so2]
• in its overflow angle [wuo] at the highest point of its overflow peak [soku]
• because of its position at the deeper end of the inclined ceiling [kod] and
• because of its steeply upward passage already in the oil inlet-inclined position [weo], in which the oil chamber to be sucked through it is still lowered,
• as far as filled with oil, that the comparatively small volume of oil [voe] in the corner [hoe] of the higher oil chamber above the oil spill point is sufficient to initiate the oil overflow, and the oil chamber empties via the oil suction lifter,
• the second oil chamber [ko2]
by tilting the device into the inclined position [weo1] also required for the sample overflow [pus]
• the oil from the first oil chamber [ko1] takes over and
while the sample overflow skew [pus] is buffered, when returning to at least the sample introduction position [pes],
• drain the oil into the emptied [kh] sample chamber neck,
• where the oil [o] covers the surface of the remaining sample mixture [pm] for testing and closes the input [lpue] of the sample overflow line [lpu] and
• thereby prevent backward contamination from the logically superior, possibly positive mixed sample [pm] in [kv] or later from one of the logically even higher mixed samples, substantive the specific gravity of the oil [o] is lower than that of the sample [pm],
• instead of oil [o] one of the following substances or mixtures of substances may also be used: an energy-hardening and therefore more secure final oil-resin mixture,
an energy-curing resin,
an emulsion which precipitates when the wax is energized, an emulsion of at least three components into which it decomposes on energy input, namely a hardening substance, has a specific gravity which is relatively high but lower than that of the sample and closing the mixed sample in the sample retention chamber [kr] after sample overflow, a hardening substance [mo], that has the lowest possible specific gravity and after sample overflow for safe mechanical cutting [sk] close the evacuated sample chamber neck [kh] and
• closes the inlet opening [lpue] of the sample overflow line [lpu], i.e. the connection to the logically superior, possibly positive mixed sample [pm] in [kv],
a non-hardening substance [mm],
• has a specific gravity between the two hardening substances, and through which the section [sk] can be laid for picking off the sample retention chamber [kr] containing the mixed sample [pm] to be tested, any other liquid or emulsion forming at least one covering skin by supplying energy, or another covering liquid or emulsion,
• the energy supply, where necessary, depending on the sample and the test method can be in particular: heat input, heat input and subsequent cooling, ultraviolet light, e.g. for synthetic resin.

9. Procedure
according to claim 8, **characterised in that**
• to minimize the risk of cross-contamination, mix the t samples only after sealing all connections and connections between the subsamples. Where:
• Instead of a sample chamber immediately mixing t sample parts, t sample chambers take up the t samples via the input lines lp (a|b|...),
• in addition, a mixing chamber [khm] accommodating the t samples is located behind the t sample overflow peaks [lpuk (a|b|...)],
• each of the t sample spill lines [lpu (a|b|...)] flows into this mixing chamber [khm],
• each of the t sample chamber necks [kh (a|b|...)] delivers a sample to the mixing chamber [khm],
• the mixed sample output line [lp (a + b + ...)] offers the mixed sample as in claim 8 (simply referred to as [lp] herein),
• instead of all the oil input lines [loa, lob, lo ...] according to claim 8, only one of the t oil input lines [lo(a|b|...)] flows into the first oil chamber [ko1],
• a pressure compensation volume comes back from the logically superior sample chamber [kv] through one of the pressure compensation lines [ldo (a|b|...)] and is performed on t as flat as possible, preferably loop or spiral pressure equalization lines [ldo (a|b|...)],
• each pressure equalization pipe [ldo (a|b|...)] is sealed near its inlet with a sufficiently large oil drop [od (a|b|...)],
• each pressure compensation line [ldo(a|b|...)] is at a lower hydrostatic level than the sample overflow tip [lpuk(a|b|...)] in the overflow slope [pus],
• the overpressure caused by sample overflow pushes the sealing oil drops [od (a|b|...)] into the t lines [ldo (a|b|...)] in the direction [ld(a|b|..)] so far until the pressure is balanced,
• the volume of each of the oil droplets [od (a|b|...)] is large enough that oil losses on the way through the pressure equalizing pipe [ldo (a|b|...)] do not lead to the breaking off of the sealing effect.
• The cross-contamination-favorable mixing of the t samples from the t chamber necks [kh (a| b|...)] in [khm] thus takes place only after sample overflow from the t sample chamber necks [kh (a|b|...)] via their sample overflow tip [lpuk(a|b|...)] and only when the sample overflow line input [lpue(a|b|...)] is covered.

10. Procedure
according to claim 8, **characterised in that**
• the system defined in claim 8 is constructed of suction lifters and buffering chambers, namely,
• on the one hand for oil as described in claim but with an additional third oil chamber [ko3]
• on the other hand for reagents that
• analogous to the oil of claim 8 are passed clocked to the hydrostatically lower sample chambers, however, as a rule an inclination earlier than the oil,
• which are filled into the lines at the individual samples in the leaf nodes,
• the oil suction lifter [so2] from the second oil chamber [ko2] does not open directly into the lower end of the specimen chamber neck [kh] but via an exit [so2x] into the third oil chamber [ko3],
• that buffers the oil during another inclined position,
• instead of the oil now the reagents flow from the second reagent chamber into the mixed sample remaining in the sample retention chamber [kr],
• only in the next oblique position the oil flows from [ko3] via another oil suction lifter [so3] at the suction lifter outlet [so3a] onto the remaining reagent-enriched mixed sample and
• then covers the surface of the remaining sample mixture [pm] for testing and closes the inlet [lpue] of the sample overflow line [lpu].

11. Procedure
according to claim 2 or 8, **characterised in that**
• the device instead of liquid collects gaseous samples and
• in the case of claim 8, a closing or covering gas is used instead of occlusive or covering oil,
• for gaseous samples whose specific gravity is greater than that of the medium surrounding the device,
the gas occluding in the case of claim 8 has a smaller specific gravity than the gaseous sample,
• for gaseous samples whose specific gravity is less than that of the medium surrounding the device, the device is tilted 180 degrees about the horizontal axis and within all descriptions "above" and "below" are inverted,
• the gas occluding or covering in the case of claim 8 has a greater specific gravity than the gaseous sample.

12. Device
for carrying out the method according to claim 1, **characterised in that**
• the sample in a sample chamber for preparation and / or amplification and / or testing is sucked individually, wherein the necessary pressure compensation takes place in a closed system,
• a special double syringe [ks] serves to introduce or aspirate, which is provided with a syringe plunger [ksk],
• a cavity as conventionally located in front of the syringe plunger [ksk] [vksu],
• another cavity [vkso], behind the syringe plunger [ksk] and also closed at the back end [ksh] of the syringe,
• and a fork [ksg], carrying two cannulas [ksnu, ksno], both protrude in the same sense of rotation but at different heights in the space covered by the fork [ksg],
• where [ksnu] is connected to [vksu] through a line [lksu], [ksno] is connected to [vkso] through a line [lkso],
both cannulas along the middle bisector [ksgm] of the fork [ksg] are slided over a sample retention chamber [kr] and a sample chamber neck [kh], and with a twisting motion [kss] around the syringe fulcrum [ksd] penetrate at two different heights,
• the cannula [ksnu] penetrating further down extends into [kr], to extract the mixed sample from [kr] or for the introduction of reagents,
• on the other hand, the cannula [ksno] penetrated further up extends into [kh] and during delivery or aspiration ensures pressure equalization.

## Revendications

1. Dispositif
• pour essais en série sur échantillons liquides avec des méthodes d'essai indépendantes de l'invention et de préférences amplificatrices, **caractérisé en ce que**
• les chambres à échantillons [kp], qui reçoivent les échantillons liquides à tester, sont disposées les unes par rapport aux autres dans une structure arborescente binaire ou ternaire via des tubulures de débordements [lpu] et sont équipées de possibilités d'égalisation de pression, de préférence chacune par une tubulure d'égalisation de pression [lda,ldb,ld...] allant vers la chambre à échantillons correspondante logiquement subordonnée [kn], donc [kpa,kpb,kp...],
• les chambres à échantillons logiquement supérieures [kv] sont physiquement plus basses que celles qui fournissent le volume à mélanger [kn],
• que chaque chambre à échantillons comprend au minimum les parties suivantes :
• en haut des t entrées [lpa,lpb,lp...] de chambres à échantillons logiquement subordonnées et hydrostatiquement plus élevées, débouchant vers le bas dans un col de chambre à échantillons [kh], et débouchant de la [kh] vers le bas dans une chambre de rétention d'échantillon [kr],
• également, entre col de chambre à échantillons [kh] et chambre de rétention d'échantillon [kr], une ouverture [lpue] à une tubulure de débordement sortante [lpu] et de [lpu] à une tubulure sortante [lp], chacune des t tubulures de débordement t [lpu,lp] d'une chambre à échantillons [kp] menant de l'une des t chambres à échantillons logiquement subordonnée donc hydrostatiquement plus élevée [kn] dans l'entrée [lpa,lpb,lp...] de la chambre à échantillons qui lui est logiquement supérieure et hydrostatiquement plus basse,
• que les chambres à échantillons accueillant les échantillons à tester sont agencées en une structure arborescente binaire ou ternaire,
• chaque chambre à échantillons [kp] accueillant un échantillon, pouvant être :
• un échantillon individuel, p. ex. une éprouvette, ou
• un échantillon fictif [p0] neutre ou
• un échantillon mixte d'un t nœud logiquement directement subordonné ou
• un échantillon mixte d'un t nœud racine logiquement directement subordonné de dispositifs en cascades,
• que chaque échantillon ou chambre à échantillons [kp] représente logiquement un nœud d'arborescence et
• le t dans « t-aire », donc le nombre de nœuds logiquement directement subordonnés par nœud interne, est fixe ou mais aussi variable sur la hauteur de l'arbre,
• chaque échantillon individuel [pe] représente logiquement un nœud feuille [kb] et correspond à une chambre à échantillons individuelle, p. ex. une éprouvette,
• chaque échantillon mixte [pm] représente logiquement un nœud interne [ki] (c.-à-d. pas de nœud feuille) et correspond à une chambre à échantillons [kp],
• le volume de chaque chambre à échantillons [kp] se répartit logiquement en un volume d'échantillon [vr] nécessaire pour un test éventuel dans une chambre de rétention d'échantillon [kr] et en un volume [vh] dans le col de chambre à échantillons [kh] à l'intérieur de [kn] qui est au moins la t-tième partie du volume [vr] de la chambre de rétention d'échantillon logiquement supérieure [kr] dans [kv].

2. Procédé
• pour des essais en série d'échantillons liquides avec des méthodes d'essai indépendantes de l'invention et de préférences amplificatrices dans un dispositif selon la revendication 1, **caractérisé en ce que**
• un échantillon est soit un échantillon individuel soit un échantillon mixte de t échantillons individuels ou mixtes ou un liquide fictif de test négatif,
• les échantillons individuels à tester [pe] sont placés dans les chambres à échantillons hydrostatiquement les plus hautes des nœuds feuilles [kb] de l'arbre pour être mélangés,
• les échantillons, de t chambres à échantillons logiquement subordonnés respectives [kpa,kpb,kp...] sont dirigés mélangés dans une chambre à échantillons [kv] qui leur est logiquement subordonnée et hydrostatiquement plus basse, de manière à ce que le niveau de liquide [hpu] de l'échantillon mixte conduise à un débordement dans la tubulure sortante [lpu],
• qu'après ce débordement, un volume d'échantillon [vh] à transmettre pour mélange s'écoule de chacune de ces t chambres à échantillons [kpa,kpb,kp...] sans autre action et est transféré au nœud logiquement supérieur suivant [kv],
• que le rapport entre un volume à tester [vr] en-dessous de l'ouverture de débordement [lpue] et le volume débordant [vh] en-dessus de celle-ci [lpue] est dimensionné de telle manière que seule une t-tième partie du volume d'échantillon [vp] s'écoule comme volume d'échantillon à transmettre [vh], tandis qu'un volume requis par test [vr] reste dans la chambre de rétention d'échantillon [kr],
• qu'ensuite, chaque nœud interne [ki] de l'arbre test contienne un mélange d'échantillon [pm] de t échantillons logiquement subordonnés [kn],
• le résultat du test d'un nœud interne [ki] représente ainsi toujours l'état de récapitulatif resp. la liaison OU des résultats de test de tous ses nœuds subordonnés, c'est-à-dire de l'ensemble du sous-arbre lui étant subordonné [bt] jusqu'aux nœuds feuilles [kb],
• le test des échantillons sera par contre commencé à la racine [wv],
• que dans chaque nœud [kp] ayant un résultat positif [+] tous ses nœuds directement subordonnés [kpa,kpb,kp...] sont respectivement testés, et la(les) distance(s) ainsi parcourue(s) conduisent à au moins une branche au moins à un nœud feuille [kba,kbb,kb...], donc au minimum à un échantillon individuel positif,
• par contre, dans chaque nœud à résultat négatif [-] également tous ses sous-arbres subordonnés [bt] y compris leurs sous-arbres jusqu'à leurs nœud feuilles [kb] sont implicitement négatifs et n'ont pas besoin d'être testés.

3. Procédé
• selon la revendication 2, **caractérisé en ce**
• **que** le mélange de l'échantillon dans la chambre à échantillons [kp], en particulier également pendant le court laps de temps jusqu'à atteinte du niveau de débordement [lpuk], sera aidé par un ou plusieurs objets magnétiquement attractifs [km] qui se trouve(nt) dans la chambre à échantillons [kp], c'est-à-dire éventuellement dans le col de la chambre à échantillons [kh] et / ou dans la chambre de rétention d'échantillon [kr] et est(sont) mis en mouvement par un champ magnétique externe mobile dans l'échantillon [pm].

4. Procédé
• selon la revendication 2, **caractérisé en ce**
• **que** le système est réalisé en technique microfluidique.

5. Procédé
• selon la revendication 2, **caractérisé en ce**
• **que** les tubulures de débordement [lpu] reliant les chambres d'échantillons [kpa,kpb,kp...] sont des siphons et disposées de telle sorte qu'un siphon [lpu], dont l'ouverture de sortie [lp] est hydrostatiquement plus basse ou placée dans une position plus basse que son ouverture d'aspiration [lpue], est immergé dans chaque chambre d'échantillon logiquement subordonnée, c'est-à-dire hydrostatiquement plus haute [kn] et mène à une des t entrées [analogue à kpa,kpb,kp...] de la chambre à échantillons subordonnée et hydrostatiquement plus basse [kv],
• **que** le procédé est tel
• **que** la montée du niveau de liquide dans le siphon [lpu] entraîne un débordement dû à l'introduction d'une t-tième partie de chacune des t chambres d'échantillons logiquement subordonnées [kn],
• **qu'**après ce débordement de siphon, le volume [vh] à transmettre pour le mélange est aspiré de chacune de ces chambres à échantillons [kpa,kpb,kp...] sans autre action que par l'effet de siphonnage en étant dosé à un t-tième du volume de la chambre à échantillons [vp] et transmis au nœud logiquement subordonné [kv].

6. Procédé
• selon la revendication 5, **caractérisé en ce que**
• du col de la chambre à échantillons [kh] une gaine de débordement [su], commençant dans une ouverture d'entrée de débordement [sue] sur le côté faisant face au siphon [lpu] de débordement d'échantillon croisant le col de chambre à échantillons [kh] en ne devenant pas plus étroite que la t-fois section des tubulures d'entrée d'échantillon [lpa,lpb,lp...] débouche dans un récipient de débordement [ku] possédant un dispositif d'égalisation de pression,
• l'ouverture d'entrée de débordement [sue] de la gaine de débordement [su] se trouve à une hauteur [hsu] telle que lors de l'introduction des t échantillons logiquement subordonnés à mélanger, une t-tième partie de l'échantillon mixte résultant stagne entre l'ouverture d'entrée de débordement d'échantillon [lpue] et ce débordement de tolérance [sue],
• par contre, une partie éventuellement excédentaire s'écoule immédiatement et définitivement dans la chambre de débordement [ku].

7. Procédé
• selon la revendication 5, **caractérisé en ce que**
• le dispositif est tel que
• la chambre à échantillons [kp] de chaque nœud interne [ki] est tourné de 180 degrés autour de l'axe central vertical [ms] par rapport au nœud logiquement subordonné [kn],
• le dispositif est inclinable dans deux positions opposées [pes] et [pus], dont l'une [pus] pointe dans la direction du flux du trop-plein d'échantillon,
• chaque embout de débordement d'échantillon [lpuk] est disposé sur le côté opposé [pus] au sens d'inclinaison d'introduction d'échantillon [pes],
• pour le procédé s'applique :
• qu'au cours de l'introduction des échantillons d'un niveau de nœuds, le dispositif est basculé dans la position inclinée d'introduction [pes] opposée à l'embout de débordement d'échantillon [lpuk] et cela de sorte que le point le plus élevé de l'embout de débordement d'échantillon [lpuk] en position inclinée d'introduction [pes] soit ainsi plus haut que le niveau d'échantillon mixte maximal [hpe] à la même inclinaison,
• qu'ainsi une différence de hauteur bloquant le débordement suivant [hdpe] entre le niveau d'échantillon mixte actuellement en cours d'élaboration [hpe] et la hauteur de l'embout de débordement [lpuk] soit obtenue et
• qu'ainsi l'échantillon ne peut pas s'écouler au-delà de cet embout de débordement [lpuk],
• que l'inclinaison alterne plusieurs fois autour de la verticale entre [pes] et [pus] pour remplir chaque niveau de nœuds suivant, mais seulement après que l'afflux de tous les échantillons est terminé dans le niveau actuel,
• que dans chaque position inclinée de débordement [pus], le niveau d'échantillon [hpe] est plus haut d'une différence de hauteur [hdpu] entre [hpe] et [lpuk] que [lpuk],
• qu'ainsi le trop-plein d'échantillon est dirigé dans le niveau suivant,
• qu'en alternant entre [pes] et [pus] les processus de mélange sont synchronisés niveau par niveau, c.-à-d. que les processus de mélange sont lancés simultanément dans toutes les chambres à échantillons du niveau de nœuds actuel.

8. Procédé
• selon la revendication 7, **caractérisé en ce**
• **que** de par sa conception, la chambre de rétention d'échantillon [kr] présente sur la paroi latérale opposée à l'embout de débordement d'échantillon [lpuk] un élargissement tel [krp] que le volume [vh] se trouvant dans la position inclinée de débordement d'échantillon [pus] et s'écoulant de par cette inclinaison est augmenté d'un volume supplémentaire [vkrp] de sorte qu'après avoir rebasculé au minimum à la verticale, le volume d'échantillon mixte restant est quelque peu inférieur au volume de la chambre de rétention d'échantillon [vr] et que son niveau n'atteint plus le niveau d'entrée [lpue] de la tubulure de débordement d'échantillon [lpu] et qu'ainsi il reste un espace suffisant [hdo] pour une huile couvrante [o], cette huile[o] ayant un poids spécifique inférieur à celui des échantillons,
• **que** le dispositif possède en outre deux chambres à huile [ko1,ko2] chacune étant décalée latéralement de la médiatrice de la chambre à échantillon [ms] de telle sorte qu'elle est soulevée à un niveau hydrostatique supérieur [ho1u,ho2u] par la position inclinée du débordement d'huile [wuo],
• **que** le dispositif présente un plafond incliné [kod] qui, même en position inclinée d'introduction d'huile [weo] penche encore vers l'axe médian [ms] de la chambre à échantillons, possède une égalisation de pression [ldo] dans son angle le plus élevé en position inclinée d'introduction d'huile [weo] et laisse sortir un siphon à huile au point le plus bas de sa position inclinée de débordement d'huile [wuo],
• **que** la première chambre à huile [ko1] :
• est reliée par t tubulures d'admission de l'huile [loa,lob,lo...] à une tubulure de sortie d'huile [lo] chacune provenant d'une des t chambres à échantillons hydrostatiquement plus élevée [kn],
• se trouve sur le côté opposé à l'embout de débordement d'échantillon [lpuk],
• est en une position inclinée [weo1] lors de l'admission de l'huile correspondant à la direction d'inclinaison d'introduction d'échantillon [pes] et
• est reliée côté sortie à la seconde chambre à huile [ko2] par un premier siphon à huile [so1], que la seconde chambre à huile [ko2] :
• lors de l'admission de l'huile, se trouve dans une position inclinée [weo2] opposée à la position inclinée d'admission de l'huile [weo1] de la première chambre à huile [ko1],
• est suffisamment grande pour contenir les volumes d'huile provenant aussi bien de la première chambre à huile [ko1] que du premier siphon à huile [so1] reliant les deux chambres à huile et,
• côté sortie, est reliée par un second siphon à huile [so2] à un point le plus bas [so2a] dans le col de chambre à échantillons [kh],
• **que** chacun des deux siphons à huile [so1,so2] :
• traverse la médiatrice [ms] des chambres à échantillons,
• se trouve, en position inclinée d'admission de l'huile, au minimum à un point [soke] plus haut que le niveau de liquide exerçant sur lui une pression le plus élevé,
• est en position inclinée de débordement d'huile [wuo] sur toute la longueur plus basse que le niveau d'huile le plus haut [hou] de la chambre à huile à vidanger en question,
• traverse à l'abrupt le plafond incliné [kod] à son extrémité la plus basse,
• **que** le premier siphon à huile [so1] :
• se trouve, également dans la position inclinée de débordement d'échantillon du second siphon à huile, au minimum un point [so1ke] plus haut que le plus haut niveau [ho2u] de la seconde chambre à huile [ko2] et empêche ainsi un reflux dans la première chambre à huile [ko1], et
• s'enfonce aussi profondément que possible dans la seconde chambre à huile [ko2] et par conséquent soit pratiquement lui-même vidangé à la fin de l'aspiration qu'il exécute ce qui empêche qu'il effectue lui-même une aspiration de reflux au cours de la prochaine inclinaison opposée,
• **que** de manière procédurale, la première chambre à huile[ko1] :
• reçoit, à partir des t chambres à échantillons hydrostatiquement plus élevées [kn], une huile [o] prévue pour recouvrir l'échantillon mixte, au moyen de sa tubulure de sortie d'huile respective [lo] puis au moyen des tubulures d'admission d'huile [loa,lob,lo...] et
• lors de l'introduction de l'huile dans la première chambre à huile [ko1] le dispositif est dans une position inclinée [weo] opposée à la position inclinée de débordement d'échantillon [pus],
• chacune des deux chambres à huile [ko1,ko2] est, par basculement, portée l'une après l'autre à un niveau hydrostatique plus élevé [hou] dans une position inclinée de débordement d'huile [wuo] opposée à la position d'admission d'huile respective [weo] et
• son huile déborde en raison de la pression du volume d'huile [voe] se trouvant dans l'angle de chambre d'huile le plus haut [hoe] du plafond incliné [kod] par le siphon à huile [so1,so2] qui émerge à un niveau inférieur à [hoe] et ainsi partiellement rempli et qu'ainsi la chambre à huile est vidangée par l'effet d'aspiration,
• **que** chacun des deux siphons à huile [so1,so2] :
• se remplit déjà d'autant d'huile, lorsqu'il est dans sa position inclinée de débordement [wuo] au point le plus élevé de son embout de débordement [soku] en raison de son passage abrupt vers le haut à l'extrémité la plus basse du plafond incliné [kod] dans la position inclinée d'admission de l'huile [weo] dans laquelle la chambre à huile qu'il doit purger est encore abaissée, que le relativement faible volume d'huile [voe], ajouté par basculement dans la position inclinée de débordement d'huile [wuo] dans l'angle au-dessus de l'embout de débordement d'huile [hoe] de la chambre à huile plus haut, suffit pour déclencher le débordement d'huile et la vidange de la chambre à huile par le siphon d'huile,
• **que** la seconde chambre à huile [ko2] :
• par basculement du dispositif dans la position inclinée [weo1] également nécessaire pour le débordement d'échantillon [pus], récupère l'huile de la première chambre à huile [ko1] et la stocke temporairement pendant la position inclinée de débordement d'échantillon [pus],
• ne laisse qu'après le rebasculement, au minimum dans la position d'introduction d'échantillon [pes], l'huile s'écouler dans le col de chambre d'échantillon purgée [kh] où l'huile [o] recouvre la surface du mélange d'échantillon [pm] devant être testé, ferme l'entrée [lpue] de la tubulure de débordement d'échantillon [lpu] et empêche ainsi des ré-contaminations de l'échantillon mixte [pm] logiquement supérieur, éventuellement positif dans la [kv] ou ultérieurement d'un des échantillons mixtes logiquement encore plus supérieurs,
• **que** matériellement :
• le poids spécifique de l'huile [o] est inférieur à celui de l'échantillon [pm],
• **qu'**à la place de l'huile [o] une des substances suivantes ou un des mélanges de substances suivants peut être utilisé :
• un mélange huile-résine qui se résinifie sous apport d'énergie et possède ainsi un pouvoir couvrant sûr,
• une résine synthétique qui durcit sous apport d'énergie,
• une émulsion qui précipite la cire sous apport d'énergie,
• une émulsion d'au moins trois composants en lesquels elle se décompose sous apport d'énergie, à savoir :
• une substance durcissante [mu] ayant un poids spécifique relativement élevé mais inférieur à celui de l'échantillon et qui scelle l'échantillon mixte dans la chambre de rétention d'échantillon [kr] après le débordement,
• une substance durcissante [mo] ayant un poids spécifique le plus faible possible et qui, pour des raisons de coupe mécanique sécurisée [sk], ferme le col de chambre d'échantillons purgé [kh] et l'ouverture d'admission [lpue] de la tubulure de débordement d'échantillon [lpu], c'est-à-dire la connexion à l'échantillon mixte [pm] logiquement supérieur, éventuellement positif dans [kv],
• une substance non durcissante [mm] ayant un poids spécifique compris entre celui des deux substances durcissantes et à travers laquelle la coupe [sk] peut être faite pour prélever la chambre de rétention d'échantillon [kr] contenant l'échantillon mixte à tester [pm],
• tout autre liquide ou émulsion formant au moins une membrane sous apport d'énergie ou • tout autre liquide couvrant ou émulsion couvrante,
• l'apport en énergie, là où nécessaire, dépendant de l'échantillon et de la méthode de test peut être :
• chaleur,
• chaleur puis refroidissement,
• lumière ultraviolette, p. ex. pour les résines artificielles.

9. Procédé
• selon la revendication 8, **caractérisé en ce que**
• pour minimiser le risque de contamination croisée, le mélange des t échantillons n'est effectué qu'après que toutes les tubulures et connexions entre les sous-échantillons ont été scellées. Ici s'applique :
• au lieu d'une chambre d'échantillons mélangeant immédiatement t échantillons partiels, les t chambres d'échantillons prélèvent les t échantillons via les tubulures d'admission lp(a|b|...),
• en plus, une chambre de mélange [khm] recevant les t échantillons se trouve derrière les embouts de débordement d'échantillon [lpuk(a|b|...)],
• chacune des t tubulures de débordement d'échantillon [lpu(a|b|...)] débouche dans cette chambre de mélange [khm],
• chacun des t cols de chambre d'échantillon [kh(a|b|...)] délivre un échantillon à la chambre de mélange [khm],
• la tubulure de sortie d'échantillon mixte [lp(a+b+...)] offre l'échantillon mixte tel que déjà décrit dans la revendication 8. (y étant simplement désigné par [lp]),
• au lieu de toutes les lignes d'admission de l'huile [loa,lob,lo...] selon la revendication 8. , une seule des tubulures d'admission d'huile [lo(a|b|...)] débouche dans la première chambre d'huile [ko1],
• un volume d'égalisation de pression revient respectivement par une des tubulures d'égalisation de pression [ldo(a|b|...)] de la chambre d'échantillons logiquement supérieure [kv] et
• est acheminé par des t tubulures d'égalisation de pression [ldo(a|b|...)] posées le plus à plat et de préférence en boucles ou en spirales,
• chaque tubulure d'égalisation de pression [ldo(a|b|...)] est scellée près de son entrée par une goutte d'huile [od(a|b|...)] suffisamment grosse,
• chaque tubulure d'égalisation de pression [ldo(a|b|...)] est à un niveau hydrostatique plus bas que l'embout de débordement d'échantillon [lpuk(a|b|...)] en position inclinée de débordement [pus],
• la surpression due au trop-plein d'échantillon pousse les t gouttes d'huile [od(a|b|...)] étanchéifiantes aussi loin dans les t tubulures [ldo(a|b|...)] en direction des [ld(a|b|...)] jusqu'à ce que la pression soit égalisée,
• le volume de chacune des gouttes d'huile [od(a|b|...)] est suffisamment important pour que des pertes d'huile pendant le parcours dans la tubulure d'égalisation de pression [ldo(a|b|...)] n'entraîne pas une rupture de l'effet étanchéisant.
• Le mélange propice à une contamination croisée des t échantillons des cols de chambre [kh(a|b|...)] dans [khm] se fait donc seulement après le débordement d'échantillon des t cols de chambres d'échantillon [kh(a|b|...)] par les embouts de débordement d'échantillon [lpuk(a|b|...)] et seulement lorsque l'entrée de conduite de débordement d'échantillon [lpue(a|b|...)] est couverte.

10. Procédé
• selon la revendication 8, **caractérisé en ce**
• **que** le système défini dans la revendication 8 comportant des siphons et des chambres tampon est construit en double, à savoir
• d'une part pour l'huile, tel que décrit dans la revendication 8, mais avec en plus une troisième chambre à huile [ko3],
• et d'autre part pour les réactifs, qui comme pour l'huile de la revendication 8, sont transmis de manière cadencée aux chambres d'échantillons hydrostatiquement plus basses, toutefois, de manière générale, d'une position inclinée plus tôt que l'huile, qui seront versés dans les tubulures dans les nœuds feuilles au niveau des échantillons individuels,
• **que** le siphon à huile [so2] de la deuxième chambre à huile [ko2] ne débouche pas directement dans l'extrémité inférieure du col de chambre d'échantillon [kh] mais, via une sortie [so2x] dans la troisième chambre à huile [ko3], qui retient temporairement l'huile d'une autre position inclinée alors qu'à la place de l'huile ce sont maintenant les réactifs qui coulent dans cette position inclinée de la seconde chambre de réactifs dans les échantillons mixtes restants dans la chambre de rétention d'échantillon [kr],
• **que** ce n'est que dans la position inclinée suivante que l'huile de [ko3] s'écoule, via un autre siphon à huile [so3] à la sortie de siphon à huile [so3a], sur l'échantillon mixte restant maintenant enrichi de réactifs, puis couvre la surface du mélange d'échantillons [pm] restant destiné à être testé et ferme l'entrée [lpue] de la conduite de débordement d'échantillon [lpu].

11. Procédé
• selon la revendication 2 ou la revendication 8, **caractérisé en ce que**
• le dispositif reçoit des échantillons gazeux au lieu d'échantillons liquides et,
• dans le cas de la revendication 8, qu'un gaz de scellement ou de couverture est utilisé à la place d'une huile de scellement ou de couverture, pour les échantillons gazeux dont le poids spécifique est supérieur à celui du milieu qui entoure le dispositif,
• le gaz scellant ou recouvrant dans le cas de la revendication 8. un poids spécifique inférieur à celui de l'échantillon gazeux, pour des échantillons gazeux, dont le poids spécifique est inférieur à celui du milieu entourant le dispositif,
• le dispositif est incliné de 180 degrés par rapport à l'axe horizontal, « haut » et « bas » devant être permutés dans toutes les descriptions,
• le gaz scellant ou recouvrant dans le cas de la revendication 8. a un poids spécifique supérieur à celui de l'échantillon gazeux.

12. Dispositif
selon la revendication 1, est **caractérisé en ce que**
• l'échantillon qui se trouve dans une chambre à échantillons pour être préparé et/ou amplifié et/ou testé sera aspiré individuellement, l'égalisation de pression nécessaire se faisant dans un système fermé,
• pour introduction et aspiration est utilisée une seringue spéciale [ks] comprenant
• un piston de seringue [ksk],
• une cavité [vksu] devant le piston de seringue [ksk], comme habituellement,
• une seconde cavité [vkso], qui se trouve derrière le piston de seringue [ksk] et qui est fermée à l'extrémité arrière [ksh] de la seringue, et
• une fourche [ksg] portant deux canules [ksnu,ksno] sortant toutes les deux dans le même sens horaire mais à des hauteurs différentes dans l'espace délimité par la fourche [ksg]
• [ksnu] étant reliée via une tubulure [lksu] à [vksu],
• [ksno] étant reliée via une tubulure [lkso] à [vkso],
• laissent entre elles suffisamment d'espace libre [dksg] pour accueillir une chambre de rétention d'échantillon [kr] et un col de chambre d'échantillon [kh],
• seront poussées le long de la bissectrice du centre [ksgm] de la fourche [ksg] sur une chambre de rétention d'échantillon [kr] et un col de chambre d'échantillon [kh] et insérées avec un mouvement de rotation [kss] autour du point de rotation de la fourche de seringue [ksd] à deux hauteurs différentes et
• dont la canule insérée en bas [ksnu] plonge ainsi dans [kr] pour aspirer l'échantillon mixte de [kr] ou pour injecter des réactifs,
• dont la canule insérée en haut [ksno] plonge par contre dans [kh] et fournit une égalisation de pression pendant l'injection ou l'aspiration.
